# EUROPÄISCHE PATENTSCHRIFT

(11) **EP 3 924 807 B1**
(45) Veröffentlichungstag und Bekanntmachung des Hinweises auf die Patenterteilung: **14.08.2024**
(21) Anmeldenummer: 20703007.3
(22) Anmeldetag: 30.01.2020
(51) Int. Cl.: G06F 3/06, G06F 21/64

(54) **VERFAHREN UND VORRICHTUNG ZUM VERARBEITEN VON IN EINER SPEICHEREINRICHTUNG GESPEICHERTEN DATEN**
METHOD AND APPARATUS FOR PROCESSING DATA STORED IN A STORAGE DEVICE
PROCÉDÉ ET DISPOSITIF DE TRAITEMENT DE DONNÉES ENREGISTRÉES DANS UN DISPOSITIF DE MÉMOIRE

(30) Priorität: 14.02.2019 DE 102019201922
(43) Veröffentlichungstag der Anmeldung: 22.12.2021
(73) Patentinhaber: Robert Bosch GmbH, 70442 Stuttgart (DE)
(72) Erfinder: JAUSS, Manuel, 73550 Wissgoldingen (DE); KARTAL, Mustafa, 71067 Sindelfingen (DE)
(86) Internationale Anmeldenummer: PCT/EP2020/052311
(87) Internationale Veröffentlichungsnummer: WO 2020/164921

(56) Entgegenhaltungen:
- WO-A1-2018/024658
- US-A1- 2018 375 696

## Beschreibung

### Stand der Technik

Die Offenbarung betrifft ein Verfahren zum Verarbeiten von in einer Speichereinrichtung gespeicherten Daten.

WO 2018/024658 betrifft ein Verfahren zum Speichern von Datenblöcken von Client Geräten zu einem Cloud-Speichersystem, wobei das Verfahren die folgenden Schrit umfasst: Speichern eines verschlüsselten ersten Datenblocks und einer Challenge des ersten Datenblocks eines ersten Client-Geräts auf dem Cloud-Speichersystem und Bestimmen, ob ein Hash-Wert eines zweiten Datenblocks eines zweiten Client-Gerä das auf dem Cloud-Speichersystem gespeichert ist, gleich dem Hash-Wert des ersten Datenblocks ist.

Die Offenbarung betrifft ferner eine Vorrichtung zum Verarbeiten von in einer Speichereinrichtung gespeicherten Daten.

### Offenbarung der Erfindung

Bevorzugte Ausführungsformen beziehen sich auf ein Verfahren zum Verarbeiten von in einer Speichereinrichtung eines Steuergeräts für ein Kraftfahrzeugs gespeicherten Daten, aufweisend die Merkmale nach Anspruch 1. Bei weiteren bevorzugten Ausführungsformen weist die Speichereinrichtung wenigstens ein Halbleiterspeicherbauelement auf und ist beispielsweise ein flüchtiger Speicher (z.B. Arbeitsspeicher, RAM, random access memory) oder ein nichtflüchtiger Speicher, z.B. ein Flash-Speicher (z.B. NOR-Flash oder NAND-Flash). Durch das zufallsabhängig oder pseudozufallsabhängig gebildete Prüfmuster kann ein der Bildung der Prüfgröße zugrunde zu legender Speicherbereich unvorhersagbar und individuell für z.B. eine bestimmte Speichereinrichtung gewählt bzw. vorgegeben werden. Die Prüfgröße charakterisiert dabei vorteilhaft einen Dateninhalt des ersten Teilbereichs und ermöglicht, z.B. durch Vergleich mit einer Referenz-Prüfgröße, die Erkennung von Veränderungen, insbesondere Manipulationen der Daten des ersten Teilbereichs.

Bei weiteren bevorzugten Ausführungsformen kann eine Vorrichtung zur Ausführung des Verfahrens gemäß den Ausführungsformen vorgesehen sein. Bei weiteren besonders bevorzugten Ausführungsformen weist die Vorrichtung wenigstens eine Recheneinrichtung auf, der beispielsweise die vorstehend beschriebene Speichereinrichtung zugeordnet sein kann, insbesondere zur zumindest zeitweisen Speicherung wenigstens eines Computerprogramms und/oder von Daten, insbesondere mittels der Vorrichtung zu verarbeitenden Daten. Weiter bevorzugt kann in der Speichereinrichtung ein Computerprogramm abgelegt sein zur Steuerung eines Betriebs der Vorrichtung, insbesondere zur Ausführung des Verfahrens gemäß den Ausführungsformen.

Bei weiteren bevorzugten Ausführungsformen weist die Recheneinrichtung wenigstens eines der folgenden Elemente auf: einen Mikroprozessor, einen Mikrocontroller, einen digitalen Signalprozessor (DSP), einen programmierbaren Logikbaustein (z.B. FPGA, field programmable gate array), einen ASIC (anwendungsspezifischen integrierten Schaltkreis). Kombinationen hieraus sind bei weiteren bevorzugten Ausführungsformen auch denkbar.

Bei weiteren bevorzugten Ausführungsformen kann der Vorrichtung neben der vorstehend bereits beschriebenen Speichereinrichtung auch wenigstens eine weitere Speichereinrichtung zugeordnet sein, die wenigstens eines der folgenden Elemente aufweist: einen flüchtigen Speicher, insbesondere Arbeitsspeicher (RAM), einen nichtflüchtigen Speicher, insbesondere Flash-Speicher, z.B. Flash-EEPROM bzw. NOR-Flash oder NAND-Flash. Bei Vorsehung der optionalen wenigstens einen weiteren Speichereinrichtung kann ein zur Steuerung eines Betriebs der Vorrichtung, insbesondere zur Ausführung des Verfahrens gemäß den Ausführungsformen, ausgebildetes Computerprogramm alternativ oder ergänzend auch in der wenigstens einen weiteren Speichereinrichtung abgelegt sein.

Bei weiteren bevorzugten Ausführungsformen entspricht der erste Teilbereich nicht dem gesamten Speicherbereich, sondern z.B. nur einem Bruchteil des gesamten Speicherbereichs. Mit anderen Worten ist bei weiteren bevorzugten Ausführungsformen demnach vorgesehen, dass das Prüfmuster den Speicherbereich nicht vollständig abdeckt. Bei weiteren bevorzugten Ausführungsformen deckt das Prüfmuster z.B. 50 % (Prozent) des Speicherbereichs der Speichereinrichtung oder weniger ab, insbesondere 20 % oder weniger. Mehr oder weniger Abdeckung als z.B. 50 % ist bei weiteren bevorzugten Ausführungsformen auch möglich.

Bei weiteren bevorzugten Ausführungsformen kann der erste Teilbereich des Speicherbereichs beispielsweise wenigstens einem Adressbereich (oder einem Teil hiervon) der Speichereinrichtung entsprechen. Bei weiteren bevorzugten Ausführungsformen charakterisiert der erste Teilbereich einen zusammenhängenden Adressbereich der Speichereinrichtung, wobei der erste Teilbereich beispielsweise durch a) eine Startadresse und eine Endadresse und/oder b) eine Startadresse und eine Länge des ersten Teilbereichs und/oder c) die Endadresse und die Länge des ersten Teilbereichs beschreibbar ist.

Bei weiteren bevorzugten Ausführungsformen charakterisiert der erste Teilbereich einen nicht zusammenhängenden Adressbereich der Speichereinrichtung, wobei entsprechend mehrere Startadressen und/oder Endadresse und/oder Längeninformationen verwendbar sind, um den ersten Teilbereich zu beschreiben. Alternativ oder ergänzend zu den vorstehend genannten Informationen (Startadresse, Endadresse, Länge) kann bei weiteren bevorzugten Ausführungsformen auch eine Adressmaske, insbesondere Bitmaske oder Bytemaske, verwendet werden, um den ersten Teilbereich zu definieren. Bei weiteren bevorzugten Ausführungsformen kann im Rahmen des zufallsabhängigen oder pseudozufallsabhängigen Bildens des Prüfmusters beispielsweise wenigstens eine der vorstehend genannten Informationen (Startadresse, Endadresse, Länge, Bitmaske bzw. Bytemaske) zufallsabhängig und/oder pseudozufallsabhängig gewählt werden. Bei weiteren bevorzugten Ausführungsformen werden bevorzugt mehrere, insbesondere alle zur Beschreibung des ersten Teilbereichs erforderlichen Informationen (Startadresse, Endadresse, Länge, Bitmaske bzw. Bytemaske) zufallsabhängig und/oder pseudozufallsabhängig gewählt bzw. gebildet.

Bei weiteren bevorzugten Ausführungsformen ist vorgesehen, dass das Verfahren weiter aufweist: zumindest zeitweises Speichern der Prüfgröße. Dadurch kann die Prüfgröße später verwendet werden, beispielsweise als Referenz-Prüfgröße zum Ermitteln, ob Daten des ersten Teilbereichs manipuliert (also absichtlich geändert) und/oder unabsichtlich verändert worden sind.

Bei weiteren bevorzugten Ausführungsformen ist vorgesehen, dass das Verfahren weiter aufweist: Vergleichen der Prüfgröße mit einer Referenz-Prüfgröße für den wenigstens einen ersten Teilbereich. Beispielsweise kann die Referenz-Prüfgröße bei einer Fertigung der Speichereinrichtung und/oder einem Programmieren der Speichereinrichtung und/oder zu einer sonstigen Gelegenheit, insbesondere unter Anwendung des Verfahrens gemäß den Ausführungsformen, ermittelt worden sein, und ggf. für einen späteren Gebrauch zumindest zeitweise, vorzugsweise in einem sicheren Speicher, abgespeichert worden sein, so dass sie für das Vergleichen zur Verfügung steht. Bei einer Abweichung der (aktuell gebildeten) Prüfgröße von der entsprechenden Referenz-Prüfgröße kann beispielsweise auf eine (unabsichtliche) Veränderung bzw. Manipulation der Daten des zugehörigen Teilbereichs bzw. der zugehörigen Teilbereiche, für die die Referenz-Prüfgröße gebildet worden ist, geschlossen werden. Sofern die aktuell gebildete Prüfgröße mit der entsprechenden Referenz-Prüfgröße übereinstimmt, kann darauf geschlossen werden, dass keine (unabsichtliche) Veränderung bzw. Manipulation betreffenden Daten vorliegt.

Bei weiteren bevorzugten Ausführungsformen ist vorgesehen, dass das Ermitteln des Prüfmusters wenigstens eines der folgenden Elemente aufweist: a) zufallsabhängiges oder pseudozufallsabhängiges Bilden des Prüfmusters, b) Empfangen des Prüfmusters von einer externen Einheit, c) Auslesen des Prüfmusters aus der Speichereinrichtung und/oder einer weiteren (d.h., anderen) Speichereinrichtung, d) Ableiten des Prüfmusters aus Prüfmusterbasisdaten.

Bei weiteren bevorzugten Ausführungsformen kann für das Bilden des Prüfmusters beispielsweise ein Pseudozufallsgenerator oder ein Zufallsgenerator verwendet werden, der einer Vorrichtung zur Ausführung des Verfahrens gemäß den Ausführungsformen, beispielsweise aufweisend einen oder ausgebildet als Mikrocontroller, zugeordnet ist. Bei weiteren bevorzugten Ausführungsformen kann beispielsweise ein Rauschsignal der Vorrichtung als Zufallsgröße für die zufallsabhängige Bildung des Prüfmusters verwendet werden, welches Rauschsignal beispielsweise an einem Analogeingang der Vorrichtung (beispielsweise Mikrocontroller) ermittelbar ist.

Bei weiteren bevorzugten Ausführungsformen kann das zufallsabhängig oder pseudozufallsabhängig gebildete Prüfmuster auch von einer externen Einheit empfangen werden, beispielsweise einer Recheneinrichtung einer Fertigungseinrichtung für eine zur Ausführung des Verfahrens gemäß den Ausführungsformen vorgesehenen Vorrichtung. In diesem Fall erfolgt bei weiteren bevorzugten Ausführungsformen die Übertragung des Prüfmusters an die Vorrichtung über einen gesicherten Kommunikationskanal.

Bei weiteren bevorzugten Ausführungsformen kann das Prüfmuster bzw. wenigstens ein Prüfmuster, bei weiteren Ausführungsformen gegebenenfalls auch mehrere Prüfmuster, in der Speichereinrichtung und/oder in der wenigstens einen weiteren (optionalen) Speichereinrichtung gespeichert sein, sodass die zur Ausführung des Verfahrens gemäß den Ausführungsformen ausgebildete Vorrichtung bei Bedarf das betreffende Prüfmuster aus der entsprechenden Speichereinrichtung einlesen kann.

Bei weiteren bevorzugten Ausführungsformen können anstelle eines vollständigen Prüfmusters beispielsweise auch zufallsabhängig oder pseudozufallsabhängig gebildete Prüfmusterbasisdaten, welche nicht bereits ein vollständiges Prüfmuster repräsentieren, vorgesehen werden und der Vorrichtung gemäß den Ausführungsformen übermittelt und/oder in wenigstens einer der Speichereinrichtungen gespeichert werden. Bei weiteren bevorzugten Ausführungsformen kann in Abhängigkeit dieser Prüfmusterbasisdaten wenigstens ein Prüfmuster durch die Vorrichtung gemäß den Ausführungsformen gebildet werden, insbesondere auch dynamisch (zur Laufzeit der Vorrichtung).

Bei weiteren bevorzugten Ausführungsformen wird wenigstens ein Prüfmuster bzw. werden die Prüfmusterbasisdaten in einer sicheren Speichereinrichtung bzw. einem sicheren Speicherbereich der Speichereinrichtung gespeichert, auf den z.B. nur eine zur Ausführung des Verfahrens gemäß den Ausführungsformen vorgesehene Vorrichtung Zugriff hat, nicht jedoch weitere (insbesondere externe) Einheiten. Dies kann beispielsweise dadurch realisiert werden, dass der Vorrichtung gemäß den Ausführungsformen eine, bevorzugt in die Vorrichtung integrierte, weitere Speichereinrichtung zugeordnet ist, die nur durch die Vorrichtung ausgelesen werden kann, und die beispielsweise keine Datenschnittstellen zu externen Einheiten aufweist. Bei weiteren bevorzugten Ausführungsformen kann die weitere Speichereinrichtung beispielsweise auch in ein Hardware-Sicherheitsmodul integriert sein, das beispielsweise auch zur Ausführung von kryptografischen Verfahren bzw. Algorithmen oder zumindest von Teilen hiervon ausgebildet ist, die bei weiteren bevorzugten Ausführungsformen z.B. zur Bildung der Prüfgröße nutzbar sind.

Bei weiteren bevorzugten Ausführungsformen ist vorgesehen, dass das Bilden des Prüfmusters folgende Schritte umfasst: Bereitstellen einer zufälligen oder pseudozufälligen, vorzugsweise binären, Zahlenfolge, Ermitteln des wenigstens einen ersten Teilbereichs in Abhängigkeit wenigstens eines ersten Teils der Zahlenfolge, wobei insbesondere eine Startadresse des ersten Teilbereichs in dem Speicherbereich in Abhängigkeit des ersten Teils der Zahlenfolge gebildet wird. Bei weiteren bevorzugten Ausführungsformen kann alternativ oder ergänzend auch eine Endadresse des ersten Teilbereichs und/oder eine Länge des ersten Teilbereichs in Abhängigkeit von der Zahlenfolge gebildet werden, insbesondere in Abhängigkeit von anderen Teilen der Zahlenfolge als des genannten ersten Teils.

Bei weiteren bevorzugten Ausführungsformen kann beispielsweise in Abhängigkeit des ersten Teils der Zahlenfolge eine Startadresse des ersten Teilbereichs und in Abhängigkeit eines zweiten Teils der Zahlenfolge, der verschieden ist von dem ersten Teil der Zahlenfolge, eine Länge des ersten Teilbereichs ermittelt werden. Sofern bei weiteren bevorzugten Ausführungsformen, siehe unten, weitere Teilbereiche vorgesehen sind, um das Prüfmuster zu bilden, können die weiteren Teilbereiche bevorzugt in vergleichbarer Weise ermittelt werden.

Bei weiteren bevorzugten Ausführungsformen kann in Abhängigkeit des ersten Teils der Zahlenfolge die Startadresse und in Abhängigkeit des zweiten Teils der Zahlenfolge die Endadresse zum Beispiel des ersten Teilbereichs ermittelt werden.

Bei weiteren bevorzugten Ausführungsformen kann die Ermittlung der Startadresse und/oder der Endadresse und/oder der Länge in Abhängigkeit eines betreffenden Teils der Zahlenfolge auch ein Multiplizieren eines durch den betreffenden Teil der Zahlenfolge repräsentierten Zahlenwerts mit einem jeweiligen vorgebbaren Faktor (der bei weiteren bevorzugten Ausführungsformen für die unterschiedlichen Teile der Zahlenfolge auch verschieden gewählt sein kann) umfassen. Die Verwendung eines entsprechenden Faktors ermöglicht vorteilhaft, aus vergleichsweise kurzen Teilen der Zahlenfolge vergleichsweise große Speicherbereiche bzw. Speicheradressen zu ermitteln. Bei weiteren bevorzugten Ausführungsformen kann der jeweilige Faktor (pseudo-) zufallsabhängig ermittelt werden oder konstant oder variabel (beispielsweise abhängig von wenigstens einem Betriebsparameter einer Vorrichtung gemäß den Ausführungsformen) gewählt sein. Bei weiteren bevorzugten Ausführungsformen kann alternativ oder ergänzend zu der genannten Verwendung des Faktors auch eine Anpassung von zuvor verwendeten Werten (Startadresse und/oder Endadresse und/oder Länge usw.) vorgesehen sein.

Bei weiteren bevorzugten Ausführungsformen kann die Startadresse des zum Beispiel ersten Teilbereichs beispielsweise auch als Adressabstand (Offset) des ersten Teilbereichs von einer Startadresse des Speicherbereichs der Speichereinrichtung interpretiert werden.

Bei weiteren bevorzugten Ausführungsformen ist vorgesehen, dass das Prüfmuster zusätzlich zu dem ersten Teilbereich wenigstens einen zweiten Teilbereich, vorzugsweise mehrere weitere Teilbereiche, charakterisiert, wobei bevorzugt der zweite Teilbereich, insbesondere der wenigstens eine weitere Teilbereich, nicht direkt an den ersten Teilbereich grenzt. Dies bedeutet, dass die Startadresse des zweiten bzw. weiteren Teilbereichs in dem Adressraum der Speichereinrichtung nicht direkt auf die Endadresse des ersten Teilbereichs oder eines anderen weiteren Teilbereichs folgt, wodurch sich eine Verteilung der zur Bildung der Prüfgröße beitragenden Teilbereiche über den Speicherbereich der Speichereinrichtung ergibt. Dadurch können vorteilhaft vergleichsweise große Bereiche der Speichereinrichtung im Wege der Bildung und Auswertung der Prüfgröße überprüft werden, ohne dass eine mit den gesamten Speicherbereich der Speichereinrichtung korrespondierende Datenmenge hierfür zu betrachten wäre. Vielmehr reicht es aus, die durch den wenigstens einen ersten Teilbereich bzw. gegebenenfalls weitere optionale Teilbereiche charakterisierten Speicherbereiche zu berücksichtigen. Dieser Überlegung liegt zugrunde, dass eine gezielte Manipulation eines solchen Speicherbereichs, der nicht durch den bzw. die Teilbereiche gemäß den Ausführungsformen im Sinne der Bildung der Prüfgröße abgedeckt ist, aufgrund der zufallsabhängigen bzw. pseudozufallsabhängige Bildung des Prüfmusters ohne Kenntnis desselben außerordentlich schwer bzw. unmöglich ist. Daher ist es bei weiteren bevorzugten Ausführungsformen ausreichend, wenn der wenigstens eine erste Teilbereich bzw. die optional weiteren Teilbereiche nicht den gesamten Speicherbereich der Speichereinrichtung abdecken. Ferner wird hierdurch die Überprüfung des Speicherbereichs im Vergleich zu solchen Varianten beschleunigt, welche die gesamten Daten des gesamten Speicherbereichs für die Bildung einer Prüfgröße berücksichtigen, weil bei den besonders bevorzugten Ausführungsformen weniger Daten als die gesamten Daten des gesamten Speicherbereichs für die Bildung der Prüfgröße verarbeitet werden.

Bei weiteren bevorzugten Ausführungsformen ist vorgesehen, dass das Verfahren weiter wenigstens eines der folgenden Elemente aufweist: a) Ermitteln des zweiten Teilbereichs in Abhängigkeit eines zweiten Teils der Zahlenfolge, der von dem ersten Teil der Zahlenfolge verschieden ist, wobei insbesondere eine Startadresse des zweiten Teilbereichs in dem Speicherbereich in Abhängigkeit des zweiten Teils der Zahlenfolge gebildet wird, b) Ermitteln der weiteren Teilbereiche in Abhängigkeit eines jeweiligen entsprechenden weiteren Teils der Zahlenfolge, der insbesondere jeweils von dem ersten Teil der Zahlenfolge und/oder von dem zweiten Teil der Zahlenfolge verschieden ist, wobei insbesondere eine Startadresse des jeweiligen weiteren Teilbereichs in dem Speicherbereich in Abhängigkeit des entsprechenden weiteren Teils der Zahlenfolge gebildet wird. Bei weiteren bevorzugten Ausführungsformen können die vorstehend unter Bezugnahme auf die Ermittlung des ersten Teilbereichs beschriebenen Aspekte auch in entsprechender Weise auf den zweiten Teilbereich und/oder wenigstens einen weiteren Speicherbereiche angewendet werden.

Bei weiteren bevorzugten Ausführungsformen ist vorgesehen, dass alle Teilbereiche dieselbe Länge aufweisen. Bei weiteren bevorzugten Ausführungsformen kann in diesem Fall beispielsweise die Startadresse oder die Endadresse des betreffenden Teilbereichs pseudozufällig bzw. zufällig ermittelt werden.

Bei weiteren bevorzugten Ausführungsformen ist vorgesehen, dass zumindest manche der Teilbereiche eine unterschiedliche Länge aufweisen. Bei weiteren bevorzugten Ausführungsformen kann in diesem Fall beispielsweise die Länge (und gegebenenfalls die Startadresse und/oder Endadresse) des betreffenden Teilbereichs pseudozufällig bzw. zufällig ermittelt werden.

Bei weiteren bevorzugten Ausführungsformen ist vorgesehen, dass das Bilden der Prüfgröße wenigstens eines der nachfolgenden Elemente aufweist: a) Anwenden einer Hashfunktion, insbesondere einer kryptologischen Hashfunktion, insbesondere auf in dem wenigstens einen ersten Teilbereich gespeicherte Daten, b) Bilden einer Prüfsumme in Abhängigkeit der in dem wenigstens einen ersten Teilbereich gespeicherte Daten, c) Bilden einer Signatur, insbesondere in Abhängigkeit von einem ersten geheimen (insbesondere asymmetrischen privaten) Schlüssel und den in dem wenigstens einen ersten Teilbereich gespeicherten Daten (bei weiteren bevorzugten Ausführungsformen kann die Signatur auch über einen Hashwert (s. Element a) weiter oben) gebildet werden), d) Bilden eines Nachrichtenauthentifizierungskodes (MAC, message authentication code), insbesondere in Abhängigkeit von einem zweiten geheimen (insbesondere symmetrischen) Schlüssel und den in dem wenigstens einen ersten Teilbereich gespeicherten Daten.

Bei weiteren bevorzugten Ausführungsformen ist vorgesehen, dass das Bilden der Prüfgröße folgende Schritte aufweist: Bilden einer primären Prüfgröße in Abhängigkeit der in dem wenigstens einen ersten Teilbereich gespeicherten Daten, vorzugsweise in Abhängigkeit von in mehreren Teilbereichen gespeicherten Daten, Bilden einer sekundären Prüfgröße wenigstens in Abhängigkeit der primären Prüfgröße.

Bei weiteren bevorzugten Ausführungsformen umfasst das Bilden der primären Prüfgröße beispielsweise das Bilden einer Prüfsumme, insbesondere einer CRC-Prüfsumme und/oder das Auswerten einer Hashfunktion, beispielsweise einer MD5 (Message Digest 5)-Hashfunktion.

Bei weiteren bevorzugten Ausführungsformen ist vorgesehen, dass das Bilden der Prüfgröße folgende Schritte aufweist: Auswählen einer ersten Anzahl von Teilbereichen des Speicherbereichs der Speichereinrichtung, Auswählen einer zweiten Anzahl von Teilbereichen des Speicherbereichs der Speichereinrichtung, die insbesondere von der ersten Anzahl verschieden sind, Bilden einer bzw. der primären Prüfgröße für die erste Anzahl von Teilbereichen des Speicherbereichs, Bilden einer bzw. der sekundären Prüfgröße für die zweite Anzahl von Teilbereichen des Speicherbereichs, wobei optional das Bilden der sekundären Prüfgröße zusätzlich für wenigstens einen Teil der primären Prüfgröße ausgeführt wird. Dadurch können vorteilhaft unterschiedliche Prüfgrößen (z.B. auch mittels unterschiedlicher Verfahren) für die verschiedenen Teilbereiche gebildet werden, wodurch vorteilhaft z.B. ein Rechenaufwand und/oder eine Manipulationssicherheit flexibel, besondere auch dynamisch, steuerbar ist. Beispielsweise kann bei weiteren bevorzugten Ausführungsformen vorgesehen sein, die erste Anzahl von Teilbereichen mit einer vergleichsweise wenig rechenaufwendig ermittelbaren Prüfgröße zu assoziieren, und die zweite Anzahl von Teilbereichen mit einer zweiten Prüfgröße zu assoziieren, die einen größeren Rechenaufwand erfordert. Durch die Auswahl der ersten Anzahl und der zweiten Anzahl bzw. des Verhältnisses der ersten Anzahl zu der zweiten Anzahl kann vorteilhaft der Rechenaufwand und/oder die Manipulationssicherheit gesteuert werden.

Weitere bevorzugte Ausführungsformen beziehen sich auf eine Verwendung des Verfahrens gemäß den Ausführungsformen vor und/oder nach und/oder während wenigstens einer der folgenden Betriebsphasen einer Recheneinrichtung, die dazu ausgebildet ist, auf die Speichereinrichtung zuzugreifen: a) Starten der Recheneinrichtung aus einem ausgeschalteten Zustand, b) Starten der Recheneinrichtung aus einem Energiesparzustand, insbesondere einem suspend-to-RAM-Zustand, c) Starten der Recheneinrichtung aus einem Rücksetzzustand, reset, insbesondere einem soft-reset, d) Normalbetrieb.

Dadurch kann vorteilhaft ein Speicherinhalt der Speichereinrichtung z.B. vor bzw. während des Startens aus einem ausgeschalteten Zustand ("Booten") bzw. eines Hochfahrens bzw. Aufwachens aus einem suspend-to-RAM-Zustand oder auch während des Normalbetriebs auf einen ordnungsgemäßen Inhalt hin überprüft werden, was auch als "runtime manipulation detection", also Manipulationserkennung zur Laufzeit, bezeichnet werden kann.

Weitere bevorzugte Ausführungsformen beziehen sich auf eine Vorrichtung zum Verarbeiten von in einer Speichereinrichtung eines Steuergeräts für ein Kraftfahrzeug gespeicherten Datenmit den Merkmalen des Anspruchs 14.

Weitere bevorzugte Ausführungsformen beziehen sich auf ein Verfahren zum Bilden eines Prüfmusters, das wenigstens einen ersten Teilbereich eines Speicherbereichs einer bzw. der Speichereinrichtung zur Speicherung von Daten charakterisiert, wobei das Prüfmuster zufallsabhängig oder pseudozufallsabhängig gebildet wird. Bei weiteren bevorzugten Ausführungsformen ist vorgesehen, dass das Verfahren zum Bilden des Prüfmusters durch die vorstehend beschriebene Vorrichtung gemäß den Ausführungsformen ausgeführt wird. Bei weiteren bevorzugten Ausführungsformen kann das Verfahren zum Bilden des Prüfmusters jedoch (auch) durch andere Einheiten ausgeführt werden, die das gebildete Prüfmuster dann beispielsweise der Vorrichtung gemäß den Ausführungsformen zur Verfügung stellen, bevorzugt über einen sicheren Kanal, z.B. in einer geschützten Fertigungsumgebung, in der die Vorrichtung gemäß den Ausführungsformen hergestellt wird.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Figur 1A: schematisch ein vereinfachtes Blockdiagramm einer Speichereinrichtung gemäß bevorzugten Ausführungsformen,
- Figur 1B: schematisch ein vereinfachtes Blockdiagramm einer Speichereinrichtung gemäß weiteren bevorzugten Ausführungsformen,
- Figur 2A: schematisch ein vereinfachtes Flussdiagramm eines Verfahrens gemäß weiteren bevorzugten Ausführungsformen,
- Figur 2B: schematisch ein vereinfachtes Flussdiagramm eines Verfahrens gemäß weiteren bevorzugten Ausführungsformen,
- Figur 3: schematisch ein vereinfachtes Flussdiagramm eines Verfahrens gemäß weiteren bevorzugten Ausführungsformen,
- Figur 4A: schematisch eine Zahlenfolge gemäß weiteren bevorzugten Ausführungsformen,
- Figur 4B: schematisch eine Tabelle mit Dateninhalten gemäß Figur 4A,
- Figur 5A: schematisch eine Zahlenfolge gemäß weiteren bevorzugten Ausführungsformen,
- Figur 5B: schematisch eine Tabelle mit Dateninhalten gemäß Figur 5A,
- Figur 6A: schematisch eine Zahlenfolge gemäß weiteren bevorzugten Ausführungsformen,
- Figur 6B: schematisch eine Multipliziereranordnung gemäß weiteren bevorzugten Ausführungsformen,
- Figur 6C: schematisch eine Tabelle mit Dateninhalten gemäß Figur 6A, 6B,
- Figur 7A: schematisch ein vereinfachtes Blockdiagramm einer Speichereinrichtung gemäß weiteren bevorzugten Ausführungsformen,
- Figur 7B: schematisch ein vereinfachtes Blockdiagramm einer Speichereinrichtung gemäß weiteren bevorzugten Ausführungsformen,
- Figur 8A: schematisch ein vereinfachtes Flussdiagramm eines Verfahrens gemäß weiteren bevorzugten Ausführungsformen,
- Figur 8B: schematisch ein vereinfachtes Flussdiagramm eines Verfahrens gemäß weiteren bevorzugten Ausführungsformen,
- Figur 9: schematisch ein vereinfachtes Flussdiagramm eines Verfahrens gemäß weiteren bevorzugten Ausführungsformen,
- Figur 10: schematisch ein vereinfachtes Flussdiagramm eines Verfahrens gemäß weiteren bevorzugten Ausführungsformen,
- Figur 11A, 11B, 11C: jeweils schematisch ein vereinfachtes Flussdiagramm eines Verfahrens gemäß weiteren bevorzugten Ausführungsformen,
- Figur 12: schematisch ein vereinfachtes Blockdiagramm einer Vorrichtung gemäß weiteren bevorzugten Ausführungsformen, und
- Figur 13: schematisch ein vereinfachtes Blockdiagramm gemäß weiteren bevorzugten Ausführungsformen.

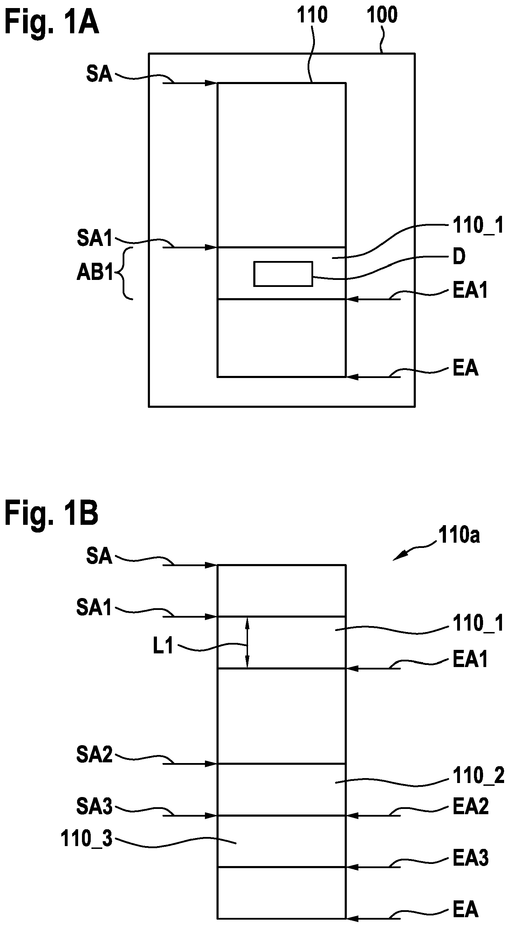

Figur 1A zeigt schematisch ein vereinfachtes Blockdiagramm einer Speichereinrichtung 100 gemäß bevorzugten Ausführungsformen. Die Speichereinrichtung 100 weist z.B. wenigstens ein Halbleiterspeicherbauelement auf und ist beispielsweise ein flüchtiger Speicher (z.B. Arbeitsspeicher, RAM, random access memory) oder ein nichtflüchtiger Speicher, z.B. ein Flash-Speicher. Zwischen einer Startadresse SA und einer Endadresse EA ist ein Speicherbereich 110 definiert.

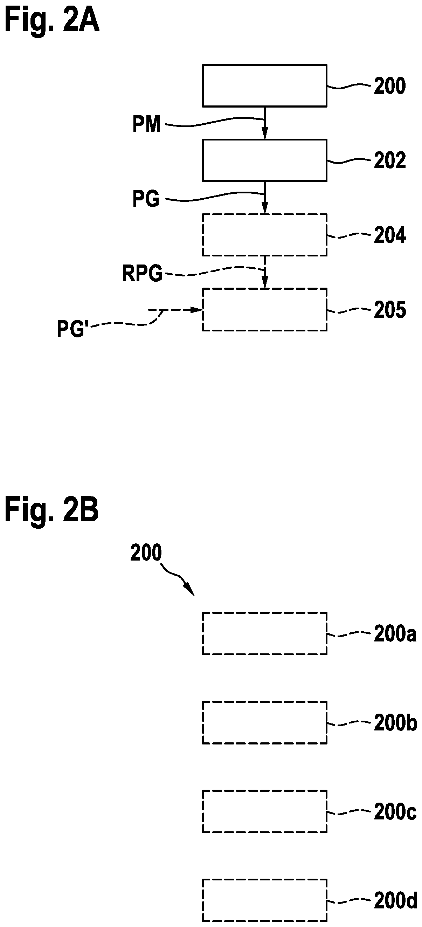

Weitere bevorzugte Ausführungsformen beziehen sich auf ein Verfahren zum Verarbeiten von in der Speichereinrichtung 100 gespeicherten Daten D, aufweisend die folgenden Schritte, vgl. auch das vereinfachte Flussdiagramm aus Figur 2A: Ermitteln 200 eines zufallsabhängig oder pseudozufallsabhängig gebildeten Prüfmusters PM, das wenigstens einen ersten Teilbereich 110_1 (Fig. 1A) eines bzw. des Speicherbereichs 110 der Speichereinrichtung 100 charakterisiert, Bilden 202 (Fig. 2A), in Abhängigkeit von dem Prüfmuster PM, einer mit in dem wenigstens einen ersten Teilbereich 110_1 gespeicherten Daten D assoziierten Prüfgröße PG. Durch das zufallsabhängig oder pseudozufallsabhängig gebildete Prüfmuster PM kann ein der Bildung der Prüfgröße PG zugrunde zu legender Speicherbereich (bzw. die darin gespeicherten Daten) unvorhersagbar und individuell für z.B. eine bestimmte Speichereinrichtung 100 gewählt werden. Die Prüfgröße PG charakterisiert dabei vorteilhaft einen Dateninhalt des ersten Teilbereichs 110_1 und ermöglicht, z.B. durch Vergleich mit einer Referenz-Prüfgröße, die Erkennung von Veränderungen, insbesondere Manipulationen der Daten des ersten Teilbereichs.

Bei weiteren bevorzugten Ausführungsformen kann die Prüfgröße, auf deren Ermittlung weiter unten näher eingegangen wird, einen (einzigen) Zahlenwert darstellen, z.B. im Falle einer Ermittlung der Prüfgröße mittels eines Prüfsummenverfahrens (z.B. CRC, cyclic redundancy check) den Wert der (CRC-)Prüfsumme oder im Falle einer Ermittlung der Prüfgröße mittels eines Hashwert-Verfahrens den Hashwert. Bei weiteren bevorzugten Ausführungsformen kann die Prüfgröße jedoch auch ein n-Tupel , n=2, 3, 4, ... von entsprechend vielen einzelnen Werten oder eine andere Form von Werten, z.B. einen Vektor und/oder eine Matrix oder dergleichen repräsentieren.

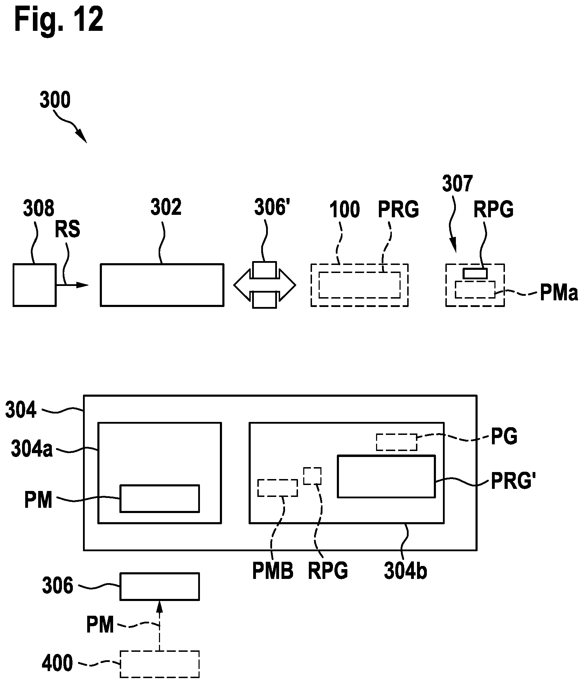

Bei weiteren bevorzugten Ausführungsformen ist eine Vorrichtung 300 zur Ausführung des Verfahrens gemäß den Ausführungsformen vorgesehen, vgl. das vereinfachte Blockdiagramm von Figur 12.

Die Vorrichtung 300 weist bevorzugt wenigstens eine Recheneinrichtung 302 auf, der beispielsweise die vorstehend beschriebene Speichereinrichtung 100 zugeordnet sein kann, insbesondere zur zumindest zeitweisen Speicherung wenigstens eines Computerprogramms PRG und/oder von Daten D (Fig. 1A), insbesondere mittels der Vorrichtung 300 zu verarbeitenden Daten. Weiter bevorzugt kann in der Speichereinrichtung 100 ein Computerprogramm PRG abgelegt sein zur Steuerung eines Betriebs der Vorrichtung 300, insbesondere zur Ausführung des Verfahrens gemäß den Ausführungsformen. Bei weiteren bevorzugten Ausführungsformen sind in der Speichereinrichtung 100 mehrere Computerprogramme (nicht in Fig. 12 gezeigt) gespeichert, z.B. ein Bootloader, der einen Startprozess der Vorrichtung bzw. das Aufrufen weiterer Computerprogramme steuern kann, sowie die weiteren Computerprogramme, bei denen es sich beispielsweise um ein Betriebssystem und/oder Anwendungsprogramme handelt.

Bei weiteren bevorzugten Ausführungsformen weist die Recheneinrichtung 302 wenigstens eines der folgenden Elemente auf: einen Mikroprozessor, einen Mikrocontroller, einen digitalen Signalprozessor (DSP), einen programmierbaren Logikbaustein (z.B. FPGA, field programmable gate array), einen ASIC (anwendungsspezifischen integrierten Schaltkreis), eine Hardwareschaltung. Kombinationen hieraus sind bei weiteren bevorzugten Ausführungsformen auch denkbar.

Bei weiteren bevorzugten Ausführungsformen kann der Vorrichtung 300 (Fig. 12) neben der vorstehend bereits beschriebenen Speichereinrichtung 100 auch wenigstens eine weitere Speichereinrichtung 304 zugeordnet sein, die wenigstens eines der folgenden Elemente aufweist: einen flüchtigen Speicher 304a, insbesondere Arbeitsspeicher (RAM), einen nichtflüchtigen Speicher 304b, insbesondere Flash-Speicher, z.B. Flash-EEPROM. Bei Vorsehung der optionalen wenigstens einen weiteren Speichereinrichtung 304 kann ein zur Steuerung eines Betriebs der Vorrichtung 300, insbesondere zur Ausführung des Verfahrens gemäß den Ausführungsformen, ausgebildetes Computerprogramm PRG' alternativ oder ergänzend auch in der wenigstens einen weiteren Speichereinrichtung 304 abgelegt sein. Auch ein oder mehrere Prüfmuster PM und/oder Prüfgrößen PG, insbesondere auch Referenz-Prüfgrößen, sind z.B. zumindest zeitweise in der Speichereinrichtung 304 speicherbar.

Bei weiteren bevorzugten Ausführungsformen, vgl. Fig. 1A, entspricht der erste Teilbereich 110_1 nicht dem gesamten Speicherbereich 110, sondern z.B. nur einem Bruchteil des gesamten Speicherbereichs 110. Mit anderen Worten ist bei weiteren bevorzugten Ausführungsformen demnach vorgesehen, dass das Prüfmuster PM (Fig. 2A) den Speicherbereich 110 nicht vollständig abdeckt. Bei weiteren bevorzugten Ausführungsformen deckt das Prüfmuster z.B. 50 % des Speicherbereichs 110 der Speichereinrichtung 100 oder weniger (oder mehr) ab, insbesondere 20 % oder weniger.

Bei weiteren bevorzugten Ausführungsformen kann der erste Teilbereich 110_1 des Speicherbereichs 110 beispielsweise wenigstens einem Adressbereich AB1 (insbesondere nicht dem gesamten theoretisch möglichen bzw. physikalisch vorhandenen Adressbereich) der Speichereinrichtung 100 entsprechen, wobei der wenigstens eine Adressbereich beispielsweise zwischen der Startadresse SA1 und der Endadresse EA1 liegt. Bei weiteren bevorzugten Ausführungsformen charakterisiert der erste Teilbereich 110_1 somit einen zusammenhängenden Adressbereich AB1 der Speichereinrichtung 100, wobei der erste Teilbereich 110_1 beispielsweise durch a) die bereits genannte Startadresse SA1 und die Endadresse EA1 und/oder b) eine Startadresse SA1 und eine Länge (nicht gezeigt) des ersten Teilbereichs 110_1 und/oder c) die Endadresse EA1 und die Länge des ersten Teilbereichs 110_1 beschreibbar ist.

Bei weiteren bevorzugten Ausführungsformen (nicht gezeigt) charakterisiert der erste Teilbereich 110_1 einen nicht zusammenhängenden Adressbereich der Speichereinrichtung 100, wobei entsprechend mehrere Startadressen und/oder Endadresse und/oder Längeninformationen verwendbar sind, um den ersten Teilbereich zu beschreiben.

Alternativ oder ergänzend zu den vorstehend genannten Informationen (Startadresse, Endadresse, Länge) kann bei weiteren bevorzugten Ausführungsformen auch eine Adressmaske, insbesondere Bitmaske oder Bytemaske oder Wortmaske oder Blockmaske (aufweisend Blöcke von z.B. jeweils k vielen Bytes, k=2, 3, 4, ..), verwendet werden, um den ersten Teilbereich 110_1 zu definieren. Bei weiteren bevorzugten Ausführungsformen kann im Rahmen des zufallsabhängigen oder pseudozufallsabhängigen Bildens des Prüfmusters PM beispielsweise wenigstens eine der vorstehend genannten Informationen (Startadresse, Endadresse, Länge, Bitmaske bzw. Bytemaske oder Wortmaske oder Blockmaske) zufallsabhängig und/oder pseudozufallsabhängig gewählt werden. Bei weiteren bevorzugten Ausführungsformen werden bevorzugt mehrere, insbesondere alle zur Beschreibung des ersten Teilbereichs erforderlichen Informationen (Startadresse, Endadresse, Länge, Bitmaske bzw. Bytemaske oder Wortmaske oder Blockmaske) zufallsabhängig und/oder pseudozufallsabhängig gewählt bzw. gebildet.

Beispielhaft kann für den Teilbereich 110_1 sowohl die Startadresse SA1 als auch die Endadresse EA1 (pseudo-)zufallsabhängig ermittelt werden, um das Prüfmuster zu bilden.

Bei weiteren bevorzugten Ausführungsformen, vgl. Fig. 2A, ist vorgesehen, dass das Verfahren weiter aufweist: zumindest zeitweises Speichern 204 der Prüfgröße PG. Dadurch kann die Prüfgröße PG später verwendet werden, beispielsweise als Referenz-Prüfgröße RPG (Fig. 12), z.B. nutzbar zum Ermitteln, ob Daten des ersten Teilbereichs 110_1 zwischenzeitlich (seit Bildung der Prüfgröße) manipuliert (also absichtlich geändert) und/oder unabsichtlich verändert worden sind.

Bei weiteren bevorzugten Ausführungsformen ist vorgesehen, dass das Verfahren weiter aufweist: Vergleichen 205 einer aktuell gebildeten Prüfgröße PG' (Fig. 2A) mit einer Referenz-Prüfgröße RPG (z.B. erhalten durch die vorangehenden Schritte 202, 204) für den wenigstens einen ersten Teilbereich 110_1. Beispielsweise kann die Referenz-Prüfgröße RPG bei einer Fertigung der Speichereinrichtung 100 und/oder einem Programmieren der Speichereinrichtung 100 und/oder zu einer sonstigen Gelegenheit, insbesondere unter Anwendung des Verfahrens gemäß den Ausführungsformen (z.B. Schritte 200, 202), ermittelt worden sein, und ggf. für einen späteren Gebrauch zumindest zeitweise, vorzugsweise in einem sicheren Speicher, abgespeichert (vgl. Schritt 204) worden sein, so dass sie für das Vergleichen 205 zur Verfügung steht. Bei einer Abweichung der (aktuell gebildeten) Prüfgröße PG' von der entsprechenden Referenz-Prüfgröße RPG kann beispielsweise auf eine (unabsichtliche) Veränderung bzw. Manipulation der Daten des zugehörigen Teilbereichs 110_1 bzw. der zugehörigen Teilbereiche, für die die Referenz-Prüfgröße RPG gebildet worden ist, geschlossen werden. Sofern die aktuell gebildete Prüfgröße PG' mit der entsprechenden Referenz-Prüfgröße RPG übereinstimmt kann darauf geschlossen werden, dass keine (unabsichtliche) Veränderung bzw. Manipulation betreffenden Daten vorliegt.

Bei weiteren bevorzugten Ausführungsformen ist vorgesehen, dass das Prüfmuster PM bei einer Fertigung der Speichereinrichtung 100 und/oder einem Programmieren der Speichereinrichtung 100 und/oder zu einer sonstigen Gelegenheit, insbesondere unter Anwendung des Verfahrens gemäß den Ausführungsformen (z.B. Schritt 200), ermittelt wird, und ggf. für einen späteren Gebrauch zumindest zeitweise, vorzugsweise in einem sicheren Speicher, abgespeichert wird, so dass es zukünftig zur Verfügung steht.

Bei weiteren bevorzugten Ausführungsformen ist vorgesehen, dass das Ermitteln 200 (Fig. 2A) des Prüfmusters PM wenigstens eines der folgenden Elemente aufweist, vgl. Fig. 2B: a) zufallsabhängiges oder pseudozufallsabhängiges Bilden 200a des Prüfmusters, b) Empfangen 200b des Prüfmusters PM von einer externen Einheit 400 (Fig. 12), z.B. mittels einer Datenschnittstelle 306, insbesondere mittels eines gesicherten Kommunikationskanals und/oder in einer gesicherten (Produktions-)Umgebung, c) Auslesen 200c des Prüfmusters aus der Speichereinrichtung 100 und/oder einer weiteren (d.h., anderen) Speichereinrichtung 304, d) Ableiten 200d des Prüfmusters aus Prüfm usterbasisdaten.

Bei weiteren bevorzugten Ausführungsformen kann für das Bilden des Prüfmusters beispielsweise ein Pseudozufallsgenerator oder ein Zufallsgenerator verwendet werden, der der Vorrichtung 300 (Fig. 12), beispielsweise aufweisend einen oder ausgebildet als Mikrocontroller, zugeordnet ist. Bei weiteren bevorzugten Ausführungsformen kann beispielsweise ein Rauschsignal RS der Vorrichtung 300 als Zufallsgröße für die zufallsabhängige Bildung des Prüfmusters verwendet werden, welches Rauschsignal RS beispielsweise an einem Analogeingang 308 der Vorrichtung 300 ermittelbar ist.

Bei weiteren bevorzugten Ausführungsformen kann das zufallsabhängig oder pseudozufallsabhängig gebildete Prüfmuster PM optional auch von einer externen Einheit 400, vgl. Fig. 12, empfangen werden, beispielsweise einer Recheneinrichtung einer Fertigungseinrichtung für die Vorrichtung 300. In diesem Fall erfolgt bei weiteren bevorzugten Ausführungsformen die Übertragung des Prüfmusters PM an die Vorrichtung 300 über einen gesicherten Kommunikationskanal und die Datenschnittstelle 306. Ein auf diese Weise empfangenes Prüfmuster PM ist ebenfalls z.B. in der weiteren Speichereinrichtung 304 speicherbar. Bei weiteren bevorzugten Ausführungsformen kann das Prüfmuster PM mittels der externen Einheit 400 unter Verwendung eines (Pseudo-)Zufallsgenerators (z.B. in Abhängigkeit eines Rauschsignals) ermittelt bzw. gebildet werden.

Bei weiteren bevorzugten Ausführungsformen kann, wie vorstehend bereits erwähnt, das Prüfmuster PM bzw. wenigstens ein Prüfmuster, bei noch weiteren Ausführungsformen gegebenenfalls auch mehrere Prüfmuster, in der Speichereinrichtung 100 und/oder in der wenigstens einen weiteren (optionalen) Speichereinrichtung 304 gespeichert sein, sodass die zur Ausführung des Verfahrens gemäß den Ausführungsformen ausgebildete Vorrichtung 300 bei Bedarf das betreffende Prüfmuster PM aus der entsprechenden Speichereinrichtung 100, 304 einlesen kann.

Bei weiteren bevorzugten Ausführungsformen ist die weitere Speichereinrichtung 304 eine in die Vorrichtung 300 integrierte Speichereinrichtung, auf die insbesondere externe Einheiten nicht zugreifen können. Bei weiteren bevorzugten Ausführungsformen ist die Speichereinrichtung 100 (Figur 12) der Vorrichtung 300 zugeordnet, jedoch gegebenenfalls extern der Vorrichtung 100 angeordnet, beispielsweise derart, dass eine Datenschnittstelle 306` (Adressbus und/oder Datenbus und/oder serieller Kommunikationsbus oder dergleichen) von außen zugänglich ist. Bei diesen Ausführungsformen ist es besonders vorteilhaft, wenn wenigstens ein Prüfmuster PM bzw. mehrere Prüfmuster bzw. alle Prüfmuster, die der Vorrichtung 300 zur Verfügung stehen, in der integrierten Speichereinrichtung 304 angeordnet sind, um eine Manipulation der Prüfmuster PM zu erschweren. Auf diese Weise kann effizient seitens der Recheneinheit 302 auf die Prüfmuster PM, die beispielsweise in dem Arbeitsspeicher 304a der integrierten Speichereinrichtung 304 gespeichert sind, zugegriffen werden, insbesondere zur Anwendung des Verfahrens gemäß den Ausführungsformen auf wenigstens einen Speicherbereich der Speichereinrichtung 100.

Bei weiteren bevorzugten Ausführungsformen können anstelle eines vollständigen Prüfmusters PM beispielsweise auch zufallsabhängig oder pseudozufallsabhängig gebildete Prüfmusterbasisdaten PMB (Fig. 12), welche nicht bereits ein vollständiges Prüfmuster repräsentieren, vorgesehen werden und der Vorrichtung 300 gemäß den Ausführungsformen übermittelt und/oder in wenigstens einer der Speichereinrichtungen 100, 304 (vorzugsweise wiederum in der integrierten Speichereinrichtung 304) gespeichert werden. Bei weiteren bevorzugten Ausführungsformen kann in Abhängigkeit dieser Prüfmusterbasisdaten PMB wenigstens ein Prüfmuster PM durch die Vorrichtung 300 gebildet werden, insbesondere auch dynamisch (zur Laufzeit der Vorrichtung 300). Hierbei können beispielsweise ein oder mehrere Zählerwerte der Recheneinrichtung 302 oder andere Betriebsgrößen Recheneinrichtung 302 verwendet werden, die Prüfmusterbasisdaten PMB in der gewünschten Weise zu variieren, um ein nicht vorhersagbares Prüfmuster zu erhalten. Bei weiteren bevorzugten Ausführungsformen kann die Bildung eines Prüfmusters in Abhängigkeit der Prüfmusterbasisdaten PMB beispielsweise vorteilhaft Rechenzeitressourcen der Recheneinrichtung 302 einsparen im Vergleich zu einer vollständigen (Neu-)Bildung eines kompletten Prüfmusters PM.

Bei weiteren bevorzugten Ausführungsformen ist der Vorrichtung 300 ein Hardware-Sicherheitsmodul bzw. Kryptografiemodul 307 oder dergleichen zugeordnet, das über einen separaten, geschützten Speicher zur Speicherung wenigstens eines Prüfmusters PMa verfügt. Besonders bevorzugt hat nur die Recheneinrichtung 302, die zur Ausführung des Verfahrens gemäß den Ausführungsformen ausgebildet ist, Zugriff auf das in dem Hardware-Sicherheitsmodul 307 gespeicherte Prüfmuster PMa.

Bei weiteren bevorzugten Ausführungsformen ist vorgesehen, dass das Hardware-Sicherheitsmodul bzw. Kryptografiemodul 307 das Verfahren gemäß den Ausführungsformen zumindest teilweise oder vollständig ausführt, z.B. die Schritte 200, 202, usw. Bei weiteren bevorzugten Ausführungsformen ist vorgesehen, dass das Hardware-Sicherheitsmodul bzw. Kryptografiemodul 307 das Prüfmuster PMa verwaltet (insbesondere speichert und/oder bildet), und/oder die Prüfgröße PG ermittelt, und/oder die Prüfgröße PG mit einer Referenzprüfgröße RPG vergleicht. Bei weiteren bevorzugten Ausführungsformen ist vorgesehen, dass das Hardware-Sicherheitsmodul bzw. Kryptografiemodul 307 dazu ausgebildet ist, ein Ergebnis des Vergleichs der Werte PG, RPG an eine weitere Einheit, z.B. die Recheneinrichtung 302, auszugeben.

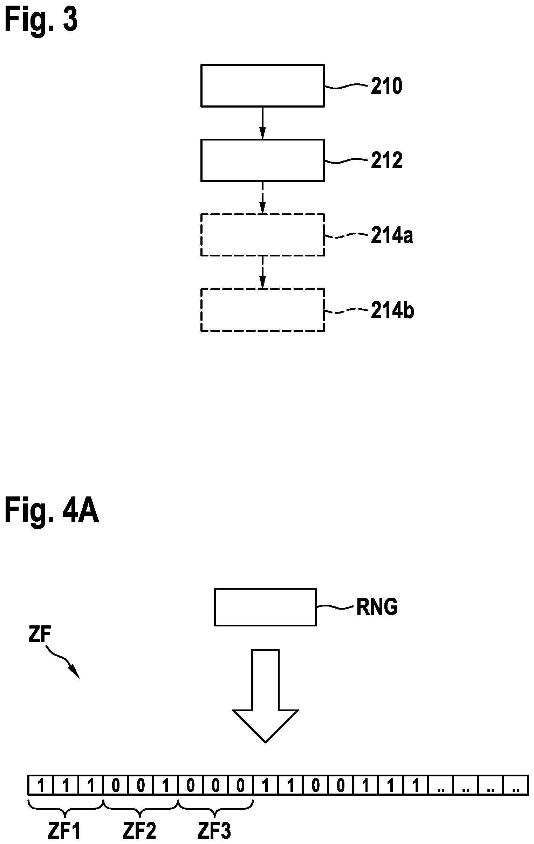

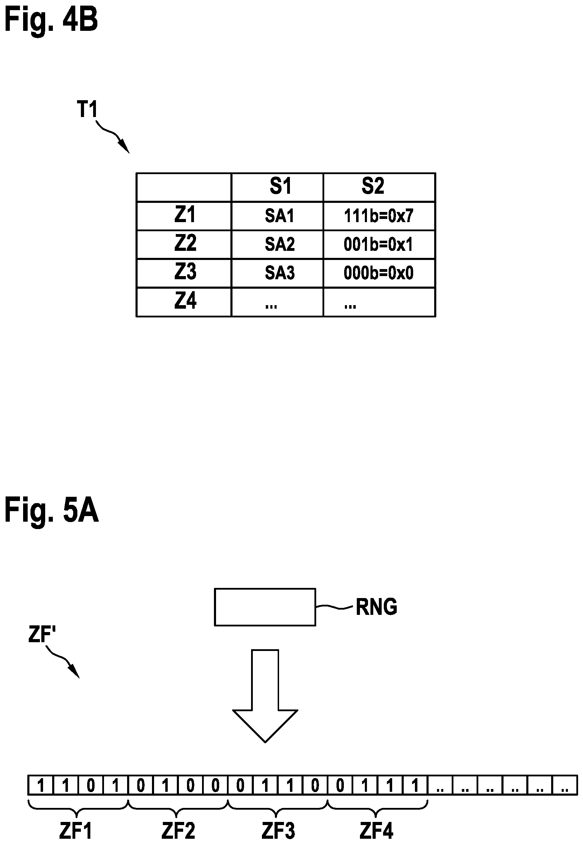

Bei weiteren bevorzugten Ausführungsformen, vergleiche das vereinfachte Flussdiagramm gemäß Figur 3, ist vorgesehen, dass das Bilden des Prüfmusters PM (Fig. 12) folgende Schritte umfasst: Bereitstellen 210 (Fig. 3) einer zufälligen oder pseudozufälligen, vorzugsweise binären, Zahlenfolge ZF, vergleiche Figur 4A, Ermitteln 212 (Fig. 3) des wenigstens einen ersten Teilbereichs 110_1 (Fig. 1A) in Abhängigkeit wenigstens eines ersten Teils ZF1 (Fig. 4A) der Zahlenfolge ZF, wobei insbesondere eine Startadresse SA1 (Fig. 1A) des ersten Teilbereichs 110_1 in dem Speicherbereich 110 in Abhängigkeit des ersten Teils ZF1 (Fig. 4A) der Zahlenfolge ZF gebildet wird. Vorliegend wird die zufällige Zahlenfolge ZF durch einen Zufallsgenerator RNG der Vorrichtung 300 (Figur 12) gebildet, und ihr erster Teil ZF1 ist in Figur 4A mit dem Bezugszeichen ZF1 bezeichnet und weist vorliegend beispielhaft drei bit "111" auf. Die Tabelle T1 gemäß Figur 4B zeigt hierzu in einer ersten Spalte S1 beispielhaft die Bezeichner von Startadressen SA1, SA2, SA3, ... verschiedener Teilbereiche gemäß weiteren bevorzugten Ausführungsformen. Beispielsweise wird bei diesen Ausführungsformen ein Prüfmuster verwendet, welches insgesamt drei Teilbereiche 110_1, 110_2, 110_3 des Speicherbereichs 110a gemäß Figur 1B charakterisiert, deren jeweilige Startadresse SA1, SA2, SA3 in der ersten Spalte S1 der Tabelle T1 bezeichnet ist.

Die zweite Spalte S2 der Tabelle T1 aus Figur 4B enthält in den Zeilen Z1, Z2, Z3, ... einen jeweiligen Teil der Zufallsfolge ZF gemäß Figur 4A. Beispielsweise ist in der Tabellenzelle, die der ersten Zeile Z1 und der zweiten Spalte S2 ("Z1;S2") entspricht, der dem ersten Teil ZF1 der Zufallsfolge ZF zugeordnete Zahlenwert (0111b (binär) bzw. 0x7 (hexadezimal) zugeordnet, der einen Adressabstand ("Offset", bevorzugt gemessen in Byte) des mit der ersten Zeile Z1 assoziierten ersten Teilbereichs 110_1 von einer Referenzadresse in dem Speicherbereich 110a (Fig. 1B), beispielsweise der Startadresse SA des Speicherbereichs 110a oder einer Endadresse eines gegebenenfalls vorangehenden Teilbereichs, angibt. Vorliegend ist der erste Teilbereich 110_1 also beispielhaft 0111b (binär), dezimal sieben, viele Byte, von der Startadresse SA des Speicherbereichs 110a entfernt. Aus Zeile Z2 und Spalte S2 der Tabelle T1 ergibt sich, für die Startadresse SA2 des zweiten Teilbereichs 110_2 ein Adressabstand bzw. Offset, vorliegend bezogen auf die Endadresse EA1 des ersten Teilbereichs 110_1, von 0x1, also 1, Byte. Es ist zu beachten, dass die Abbildung gemäß Figur 1B nicht maßstabsgetreu ist.

Bei weiteren bevorzugten Ausführungsformen ist die Länge aller Teilbereiche 110_1, 110_2, 110_3, die durch das Prüfmuster charakterisiert sind, konstant, z.B. fest vorgegeben bzw. konfigurierbar (parametriert). Daher kann die jeweilige Endadresse EA1, EA2, EA3 der betreffenden Teilbereiche 110_1, 110_2, 110_3 besonders effizient durch Addition der konstanten Länge zu der jeweiligen Startadresse SA1, SA2, SA2 ermittelt werden.

Bei weiteren bevorzugten Ausführungsformen kann die Startadresse SA1 eines betrachteten Teilbereichs 110_1 in Abhängigkeit des zugeordneten Teils ZF1 der Zufallsfolge ZF auch derart ermittelt werden, dass der Wert des Teils der Zufallsfolge ZF1 mit einem konstanten bzw. konfigurierbaren ersten Faktor F1 multipliziert wird. Beispielhaft kann der erste Faktor F1 bei weiteren bevorzugten Ausführungsformen 32 betragen, F1 = 32. In diesem Fall kann, basierend auf dem beispielhaft vorgegebenen Wert des ersten Teils ZF1 der Zufallsfolge ZF, die Startadresse SA1 des ersten Teilbereichs 110_1 durch Multiplikation des Wert des ersten Teils ZF1 mit dem ersten Faktor F1 ermittelt werden, vorliegend also SA1 = 7 (entsprechend 111b) * F1 = 7 * 32 = 224 (Byte). Der erste Teilbereich 110_1 beginnt bei dieser Ausführungsform also bei der Startadresse SA1 = 224 (also z.B. SA+224). In entsprechender Weise kann für die Startadresse SA2 des zweiten Teilbereichs 110_2 ermittelt werden: SA2 = 001b * 32 = 32, wobei diese zweite Startadresse SA2 beispielsweise den Abstand des Beginns des zweiten Teilbereichs 110_2 von der Endadresse EA1 des vorangehenden ersten Teilbereichs 110_1 angibt. Für die Startadresse SA3 des dritten Teilbereichs 110_3 ergibt sich aus der Tabelle T1 gemäß Figur 4B, Spalte S2, Zeile Z3 - auch unter Anwendung des Faktors F1 - vorliegend der Wert 000b. Dies bedeutet, dass die Startadresse SA3 des dritten Teilbereichs 110_3 direkt auf die Endadresse EA2 des vorangehenden zweiten Teilbereichs 110_2 folgt.

Bei weiteren bevorzugten Ausführungsformen kann der erste Faktor F1 auch pseudozufallsabhängig oder zufallsabhängig gewählt werden, wobei vorteilhaft jedoch eine Untergrenze und/oder eine Obergrenze für den ersten Faktor F1 vorgegeben wird, insbesondere in Abhängigkeit der Größe des gesamten Speicherbereichs 110a und/oder in Abhängigkeit der Anzahl von Teilbereichen, die dem betreffenden Prüfmuster zugrunde liegt. Alternativ können bei weiteren bevorzugten Ausführungsformen auch für Teile ZF1, 2, 3 der Zufallsfolge ZF Unter- und Obergrenzen vorgegeben werden. Unterschreitet bzw. überschreitet z.B. ein Teil der Zahlenfolge (bspw. ZF1) die Unter- bzw. Obergrenze, so fließt dieser Teil der Zahlenfolge (bspw. ZF1) nicht in die Prüfmusterbildung ein und es wird stattdessen der darauffolgende Zahlenteil (bspw. ZF2) verwendet, usw.

Bei weiteren bevorzugten Ausführungsformen kann für die Bildung des Prüfmusters PM die vorgebbare Anzahl von Teilbereichen vorgegeben werden, wodurch vorteilhaft ein weiterer Freiheitsgrad zur Steuerung der Bildung des Prüfmusters PM gegeben ist.

Bei weiteren bevorzugten Ausführungsformen kann alternativ oder ergänzend auch eine Endadresse EA1 des z.B. ersten Teilbereichs 110_1 und/oder eine Länge des ersten Teilbereichs 110_1 in Abhängigkeit von der Zahlenfolge ZF (Fig. 4A) gebildet werden, insbesondere in Abhängigkeit von anderen Teilen der Zahlenfolge als des genannten ersten Teils ZF1.

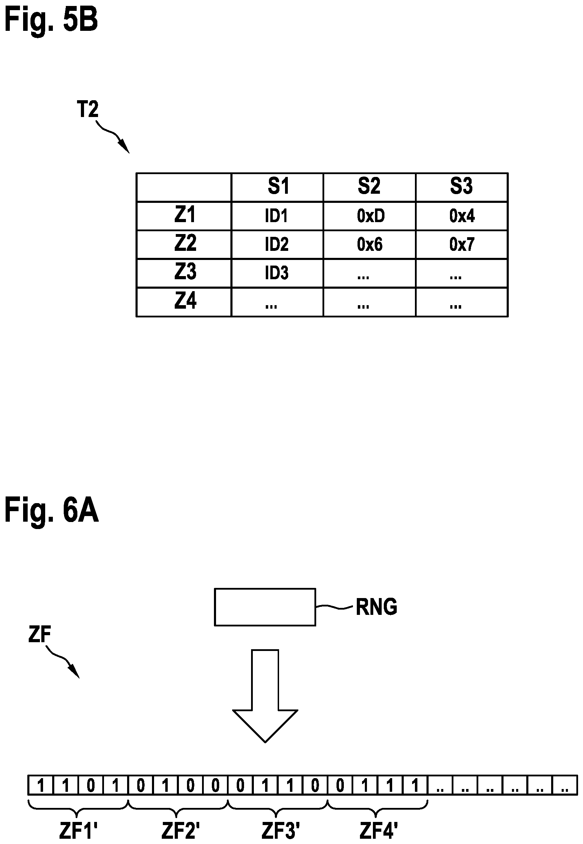

Bei weiteren bevorzugten Ausführungsformen, vergleiche die Zufallsfolge ZF' gemäß Figur 5A und die Tabelle T2 gemäß Figur 5B, kann beispielsweise in Abhängigkeit des ersten Teils ZF1 der Zahlenfolge ZF` eine Startadresse SA1 des ersten Teilbereichs 110_1 und in Abhängigkeit eines zweiten Teils ZF2 der Zahlenfolge ZF`, der verschieden ist von dem ersten Teil ZF1 der Zahlenfolge ZF`, eine Länge L1 (Fig. 1B) des ersten Teilbereichs 110_1 ermittelt werden. Sofern bei weiteren bevorzugten Ausführungsformen weitere Teilbereiche 110_2, 110_3, ... vorgesehen sind, um das Prüfmuster zu bilden, können die weiteren Teilbereiche bei weiteren bevorzugten Ausführungsformen in vergleichbarer Weise ermittelt werden.

In der Tabelle T2 gemäß Figur 5B ist bespielhaft die erste Zeile Z1 einem ersten Speicherbereich eines Prüfmusters zugeordnet, die zweite Zeile Z2 einem zweiten Speicherbereich, usw. Ein Zufallswert, der sich durch den ersten Teil ZF1 der Zahlenfolge ZF` ergibt, ist in Spalte S2, Zeile Z1 eingetragen und charakterisiert bei weiteren bevorzugten Ausführungsformen eine Größe bzw. Länge des ersten Teilbereichs 110_1. Ein weiterer Zufallswert, der sich durch den zweiten Teil ZF2 der Zahlenfolge ZF` ergibt, ist in Spalte S3, Zeile Z1 eingetragen und charakterisiert bei weiteren bevorzugten Ausführungsformen einen Adressabstand (Offset) des ersten Teilbereichs 110_1 zu dem nachfolgenden zweiten Teilbereich 110_2, also beispielsweise eine Differenz zwischen der Startadresse SA2 des zweiten Teilbereichs und der Endadresse EA1 des ersten Teilbereichs. Ein dritter Zufallswert, der sich durch den dritten Teil ZF3 der Zahlenfolge ZF` ergibt, ist in Spalte S2, Zeile Z2 eingetragen und charakterisiert die Länge des zweiten Teilbereichs 110_2. Ein vierter Zufallswert, der sich durch den vierten Teil ZF4 der Zahlenfolge ZF` ergibt, ist in Spalte S3, Zeile Z2 eingetragen und charakterisiert den Adressabstand (Offset) des zweiten Teilbereichs 110_2 zu dem nachfolgenden dritten Teilbereich, usw.

Bei weiteren bevorzugten Ausführungsformen kann in Abhängigkeit des ersten Teils ZF1 der Zahlenfolge ZF` die Startadresse und in Abhängigkeit des zweiten Teils ZF2 der Zahlenfolge ZF` die Endadresse zum Beispiel des ersten Teilbereichs und/oder wenigstens eines weiteren Teilbereichs ermittelt werden.

Bei weiteren bevorzugten Ausführungsformen kann die Ermittlung der Startadresse und/oder der Endadresse und/oder der Länge wenigstens eines Teilbereichs in Abhängigkeit eines betreffenden Teils der Zahlenfolge auch ein Multiplizieren eines durch den betreffenden Teil der Zahlenfolge repräsentierten Zahlenwerts mit einem jeweiligen vorgebbaren Faktor (z.B. ähnlich zu dem vorstehend beschriebenen ersten Faktor, wobei der jeweilig vorgebbare Faktor bei weiteren bevorzugten Ausführungsformen für die unterschiedlichen Teile der Zahlenfolge auch verschieden gewählt sein kann) umfassen. Die Verwendung eines entsprechenden Faktors ermöglicht vorteilhaft, aus vergleichsweise kurzen Teilen ZF1, ZF2, .. der Zahlenfolge ZF, ZF' vergleichsweise große Speicherbereiche bzw. Speicheradressen und/oder vergleichsweise große Offsets zwischen den jeweiligen Speicherbereichen (sofern z.B. der Faktor mit den Teilen der Zufallsfolge multipliziert wird, die den Offset kodieren) zu ermitteln. Bei weiteren bevorzugten Ausführungsformen kann der jeweilige Faktor (pseudo-) zufallsabhängig ermittelt werden oder konstant oder variabel (beispielsweise abhängig von wenigstens einem Betriebsparameter der Vorrichtung 300 (Fig. 12)) gewählt sein.

Bei weiteren bevorzugten Ausführungsformen kann die Startadresse SA1 des z.B. ersten Teilbereichs 110_1 beispielsweise auch als Adressabstand (Offset) des ersten Teilbereichs 110_1 von der Startadresse SA des Speicherbereichs 110a (Fig. 1B) der Speichereinrichtung interpretiert werden.

Bei weiteren bevorzugten Ausführungsformen ist vorgesehen, dass das Prüfmuster zusätzlich zu dem ersten Teilbereich 110_1 wenigstens einen zweiten Teilbereich 110_2 (Fig. 1B), vorzugsweise mehrere weitere Teilbereiche, charakterisiert, wobei bevorzugt der zweite Teilbereich 110_2, insbesondere der wenigstens eine weitere Teilbereich, nicht direkt an den ersten Teilbereich 110_1 grenzt. Dies bedeutet, dass die Startadresse SA2 des zweiten bzw. weiteren Teilbereichs in dem Adressraum der Speichereinrichtung nicht direkt auf die Endadresse EA1 des ersten Teilbereichs 110_1 oder eines anderen weiteren (vorangehenden) Teilbereichs folgt, wodurch sich eine Verteilung der zur Bildung der Prüfgröße PG (Fig. 2A) beitragenden Teilbereiche 110_1, 110_2 über den Speicherbereich 110a (Fig. 1B) der Speichereinrichtung 100 ergibt. Dadurch können vorteilhaft vergleichsweise große Bereiche der Speichereinrichtung 100 (Fig. 1) im Wege der Bildung und Auswertung der Prüfgröße überprüft werden, ohne dass eine mit den gesamten Speicherbereich 110, 110a der Speichereinrichtung 100 korrespondierende Datenmenge hierfür zu betrachten wäre. Vielmehr reicht es aus, die durch den wenigstens einen ersten Teilbereich 110_1 bzw. gegebenenfalls weitere optionale Teilbereiche 110_2, 110_3 charakterisierten Speicherbereiche zu berücksichtigen. Dieser Überlegung liegt zugrunde, dass eine gezielte Manipulation eines solchen Speicherbereichs bzw. Teils des Speicherbereichs, der nicht durch den bzw. die Teilbereiche 110_1, 110_2, ... gemäß den Ausführungsformen im Sinne der Bildung der Prüfgröße PG abgedeckt ist, aufgrund der zufallsabhängigen bzw. pseudozufallsabhängige Bildung des Prüfmusters PM außerordentlich schwer bzw. unmöglich ist, insbesondere bei solchen weiteren bevorzugten Ausführungsformen, bei denen das Prüfmuster PM wiederholt, insbesondere periodisch, neu gebildet wird. Daher ist es bei weiteren bevorzugten Ausführungsformen ausreichend, wenn der wenigstens eine erste Teilbereich 110_1 bzw. die optional weiteren Teilbereiche 110_2, 110_3 nicht den gesamten Speicherbereich 110, 110a der Speichereinrichtung 100 abdecken. Ferner wird hierdurch die Überprüfung des Speicherbereichs 110, 110a im Vergleich zu solchen Varianten beschleunigt, welche die gesamten Daten des gesamten Speicherbereichs für die Bildung einer Prüfgröße berücksichtigen, weil bei den besonders bevorzugten Ausführungsformen weniger Daten als die gesamten Daten des gesamten Speicherbereichs für die Bildung der Prüfgröße verarbeitet werden.

Bei weiteren bevorzugten Ausführungsformen ist vorgesehen, dass das Verfahren weiter aufweist, vergleiche das Flussdiagramm gemäß Figur 3: a) Ermitteln 214a des zweiten Teilbereichs 110_2 in Abhängigkeit eines zweiten Teils ZF2 der Zahlenfolge ZF, ZF' (Fig. 4A, 5A), der von dem ersten Teil ZF1 der Zahlenfolge ZF, ZF` verschieden ist, wobei insbesondere eine Startadresse SA2 des zweiten Teilbereichs 110_2 in dem Speicherbereich 110, 110a in Abhängigkeit des zweiten Teils ZF2 der Zahlenfolge ZF, ZF` gebildet wird. Weitere bevorzugte Ausführungsformen hierzu sind bereits vorstehend unter Bezugnahme auf die Figuren 4A, 4B, 5A, 5B beschrieben worden.

Bei weiteren bevorzugten Ausführungsformen ist vorgesehen, dass das Verfahren weiter aufweist, vergleiche das Flussdiagramm gemäß Figur 3: Ermitteln 214b der weiteren Teilbereiche 110_3, ... in Abhängigkeit eines jeweiligen entsprechenden weiteren Teils ZF3, ZF4 der Zahlenfolge ZF`, der insbesondere jeweils von dem ersten Teil ZF1 der Zahlenfolge ZF` und/oder von dem zweiten Teil ZF2 der Zahlenfolge ZF` verschieden ist, wobei insbesondere eine Startadresse SA3 des jeweiligen weiteren Teilbereichs 110_3 in dem Speicherbereich 110a in Abhängigkeit des entsprechenden weiteren Teils ZF3 der Zahlenfolge ZF` gebildet wird. Bei weiteren bevorzugten Ausführungsformen können die vorstehend unter Bezugnahme auf die Ermittlung des ersten Teilbereichs 110_1 beschriebenen Aspekte auch in entsprechender Weise auf den zweiten Teilbereich und/oder wenigstens einen weiteren Speicherbereiche angewendet werden.

Bei weiteren bevorzugten Ausführungsformen ist - wie vorstehend bereits unter Bezugnahme auf Fig. 1B erwähnt - vorgesehen, dass wenigstens zwei, vorzugsweise alle, Teilbereiche 110_1, 110_2, 110_3 dieselbe Länge L1 aufweisen. Bei weiteren bevorzugten Ausführungsformen kann in diesem Fall beispielsweise die Startadresse oder die Endadresse des betreffenden Teilbereichs pseudozufällig bzw. zufällig ermittelt werden. Bei weiteren bevorzugten Ausführungsformen ist auch denkbar, die konstante Länge L1 (pseudo-) zufallsabhängig zu ermitteln und sodann für die Definition der verschiedenen Teilbereiche zu verwenden.

Bei weiteren bevorzugten Ausführungsformen ist vorgesehen, dass zumindest manche der Teilbereiche eine unterschiedliche Länge aufweisen. Bei weiteren bevorzugten Ausführungsformen kann in diesem Fall beispielsweise die Länge (und gegebenenfalls die Startadresse und/oder Endadresse) des betreffenden Teilbereichs pseudozufällig bzw. zufällig ermittelt werden.

Bei weiteren bevorzugten Ausführungsformen ist vorgesehen, dass die Länge L1 (Fig. 1B) wenigstens eines Teilbereichs 110_1 in Abhängigkeit wenigstens eines Teils der Zahlenfolge ZF, ZF' ermittelt wird.

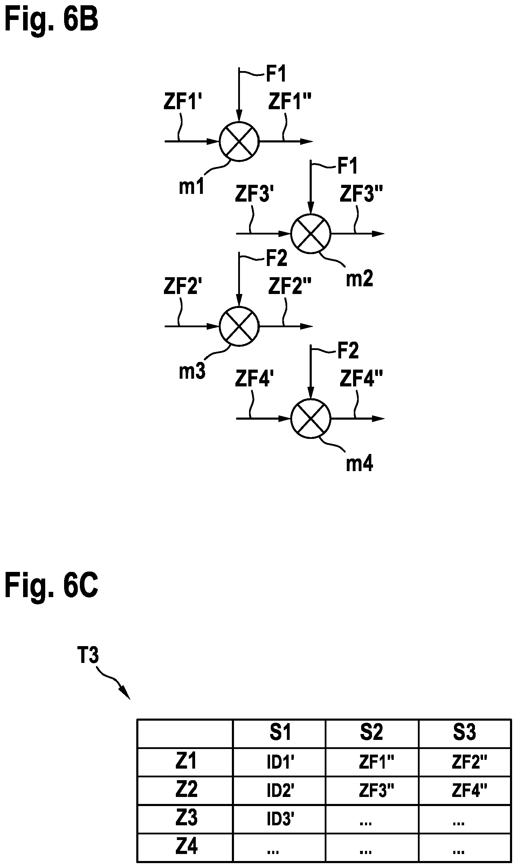

Nachstehend sind unter Bezugnahme auf die Figuren 6A, 6B, 6C weitere bevorzugte Ausführungsformen beschrieben. Figur 6A zeigt eine Zufallsfolge ZF, die vorliegend beispielhaft in vier unterschiedliche Teile ZF1', .., ZF4` eingeteilt ist, wobei jeder dieser Teile beispielhaft eine Länge von 4 Bit umfasst. Durch die Multipliziereranordnung gemäß Figur 6B werden die entsprechenden Binärwerte der unterschiedlichen Teile ZF1', .., ZF4` mittels eines ersten Faktors F1 und eines zweiten Faktors F2 in unterschiedliche Ausgangswertebereiche transformiert bzw. skaliert. Beispielsweise wird mittels eines ersten Multiplizierers m1 ein dem ersten Teil ZF1` der Zufallsfolge ZF zugeordneter Wert mit dem ersten Faktor F1 multipliziert, wobei als Produkt der Ausgangswert ZF1" erhalten wird, der vorliegend auch in Spalte S2 und Zeile Z1 der Tabelle T3 gemäß Figur 6C eingetragen ist. Dieser Ausgangswert ZF1" kann bei weiteren bevorzugten Ausführungsformen beispielhaft zur Festlegung der Größe bzw. Länge L1 des ersten Teilbereichs 110_1 verwendet werden. In vergleichbarer Weise wird mittels eines zweiten Multiplizierers m2 (Fig. 6B) ein weiterer Ausgangswert ZF3" ermittelt, der in Spalte S2, Zeile Z2 eingetragen ist und beispielhaft zur Festlegung der Größe bzw. Länge des zweiten Teilbereichs verwendet wird. Die in der Spalte S3, Zeile Z1, Z2 ermittelten Ausgangswerte ZF2", ZF4" können wie aus Figur 6B ersichtlich mittels der weiteren Multiplizierer m3, m4 in Abhängigkeit der weiteren Teile ZF2`, ZF4` der Zufallsfolge ZF und eines zweiten Faktors F2 ermittelt werden und definieren beispielsweise einen Adressabstand bzw. Offset der mit der entsprechenden Zeile Z1, Z2 korrespondierenden Teilbereiche zu einem Ende eines jeweils vorangehenden Teilbereichs bzw. der Startadresse SA des Speicherbereichs 110a (Fig. 1B).

Bei weiteren bevorzugten Ausführungsformen kann auch der zweite Faktor F2 konstant, beispielsweise konfigurierbar oder auch (pseudo-) zufallsabhängig bildbar sein.

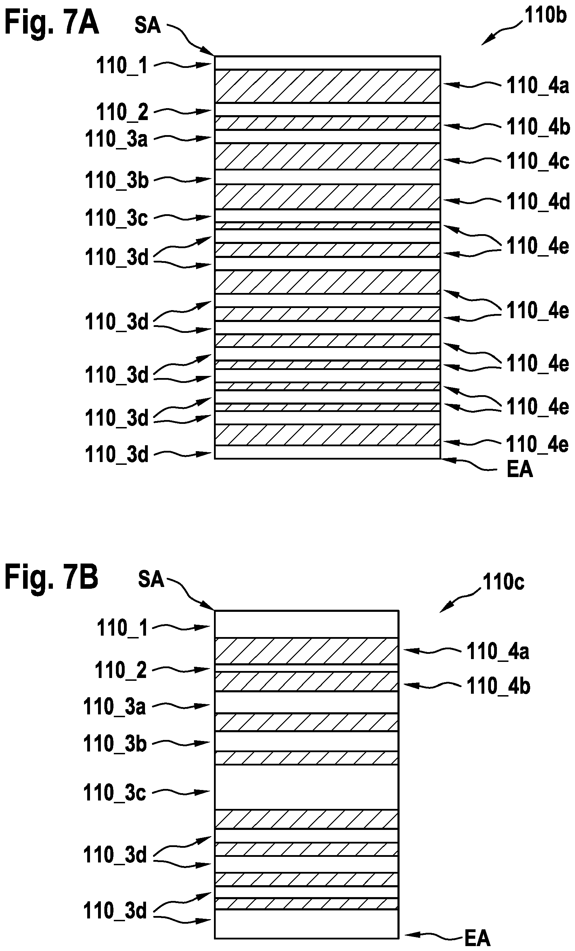

Figur 7A zeigt schematisch ein vereinfachtes Blockdiagramm eines Speicherbereichs 110b einer Speichereinrichtung gemäß weiteren bevorzugten Ausführungsformen. Der durch die Startadresse SA und die Endadresse EA definierte Speicherbereich 110b der Speichereinrichtung ist vorliegend in eine Vielzahl von unterschiedlichen Teilbereichen 110_1, 110_2, 110_3a, 110_3b, 110_3c, 110_3d (bezeichnet kollektiv mehrere weitere Teilbereiche), 110_4a, 110_4b, 110_4c, 110_4d, 110_4e (bezeichnet Kollektiv mehrere weitere Teilbereiche) unterteilt. Dabei bilden die Teilbereiche 110_1, 110_2, 110_3a, 110_3b, 110_3c, 110_3d ein Prüfmuster PM (Fig. 12) gemäß den Ausführungsformen, das beispielsweise (pseudo-)zufallsbasiert gemäß den vorstehend beispielhaft beschriebenen Ausführungsformen gebildet worden ist. Jeder der Teilbereiche 110_1, 110_2, 110_3a, 110_3b, 110_3c, 110_3d kann dabei beispielhaft durch eine jeweilige Startadresse und eine jeweilige Endadresse charakterisiert werden, die aus Gründen der Übersichtlichkeit nicht abgebildet sind. Die weiteren Teilbereiche 110_4a, 110_4b, 110_4c, 110_4d, 110_4e sind nicht Bestandteil des Prüfmusters PM, werden bei weiteren bevorzugten Ausführungsformen somit nicht der Bildung der Prüfgröße PG (vergleiche Schritt 202 aus Figur 2A) zu Grunde gelegt. Bei der beispielhaft in Figur 7A gezeigten Konfiguration weisen alle Teilbereiche, die zusammen das Prüfmuster bilden, beispielhaft die gleiche Länge auf. Aus Figur 7A ist ersichtlich, dass das durch die Teilbereiche 110_1, 110_2, 110_3a, 110_3b, 110_3c, 110_3d charakterisierte bzw. gebildete Prüfmuster den gesamten Speicherbereich 110b im Wesentlichen gleichmäßig abdeckt, sodass mit der gemäß den Ausführungsformen in Abhängigkeit des Prüfmusters PM ermittelten Prüfgröße PG eine zuverlässige Überprüfung des gesamten Speicherbereichs 110b möglich ist. Dadurch, dass das Prüfmuster PM Zufallselemente enthält, kann ein Angreifer das Prüfmuster PM bzw. Teile hiervon, also insbesondere die Anzahl und/oder Lage und/oder Größe einzelner Teilbereiche, nicht kennen und nicht vorhersagen, sodass auf dieser Basis die Bildung der Prüfgröße PG und damit gegebenenfalls eine Manipulation, die eine Nachbildung der Prüfgröße unter Veränderung von Daten des Speicherbereichs 110b zum Gegenstand hat, außerordentlich schwer bzw. unmöglich ist.

Figur 7B zeigt schematisch ein vereinfachtes Blockdiagramm einer eines Speicherbereichs 110c einer Speichereinrichtung 100 gemäß weiteren bevorzugten Ausführungsformen. Wie aus Figur 7B ersichtlich ist, weisen die mit dem Prüfmuster PM assoziierten Teilbereiche 110_1, 110_2, 110_3a, 110_3b, 110_3c, 110_3d verschiedene Längen auf, die bei weiteren bevorzugten Ausführungsformen beispielsweise zufallsabhängige, insbesondere in Abhängigkeit der Zufallsfolge ZF, ZF' ermittelbar sind. Einige der vorliegend nicht durch das Prüfmuster PM abgedeckten Teilbereiche sind in Figur 7B symbolisch mit den Bezugszeichen 110_4a, 110_4b bezeichnet.

Die vorstehend unter Bezugnahme auf Figur 7A, 7B (nicht maßstabsgetreu bzw. stark schematisiert) abgebildeten Speicherbereiche und ihre Teilbereiche sowie die Aufteilung der Teilbereiche auf eine Zugehörigkeit zur Bildung eines Prüfmusters sind rein beispielhaft. Bei weiteren bevorzugten Ausführungsformen können auch andere Anzahlen von jeweiligen Teilbereichen und/oder Anordnungen der jeweiligen Teilbereiche innerhalb der Speicherbereiche 110b, 110c und dergleichen vorgenommen werden.

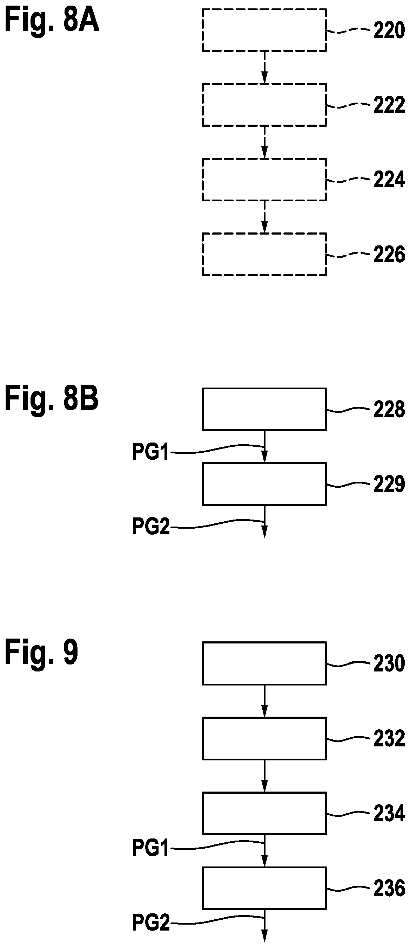

Bei weiteren bevorzugten Ausführungsformen ist vorgesehen, dass das Bilden 202 (Fig. 2A) der Prüfgröße PG wenigstens eines der nachfolgenden Elemente aufweist, vergleiche auch das vereinfachte Flussdiagramm gemäß Figur 8A: a) Anwenden 220 einer Hashfunktion, insbesondere einer kryptologischen Hashfunktion, insbesondere auf in dem wenigstens einen ersten Teilbereich 110_1 gespeicherte Daten D (Fig. 1A), b) Bilden 222 einer Prüfsumme in Abhängigkeit der in dem wenigstens einen ersten Teilbereich 110_1 gespeicherte Daten D, c) Bilden 224 einer Signatur, insbesondere in Abhängigkeit von einem ersten geheimen (bzw. privaten) Schlüssel und den in dem wenigstens einen ersten Teilbereich 110_1 gespeicherten Daten (und/oder einem Hashwert der in dem Teilbereich 110_1 gespeicherten Daten (aus Schritt 220 und 224)), d) Bilden 226 eines Nachrichtenauthentifizierungskodes (MAC, message authentication code), insbesondere CMAC (cipher-based MAC) insbesondere in Abhängigkeit von einem zweiten geheimen (bzw. symmetrischen) Schlüssel und den in dem wenigstens einen ersten Teilbereich 110_1 gespeicherten Daten D.

Bei weiteren bevorzugten Ausführungsformen kann das Anwenden 220 einer Hashfunktion beispielsweise das Anwenden eine Hashfunktion vom Typ SHA-2 umfassen, beispielsweise SHA-224 und/oder SHA-256 und/oder SHA-384 und/oder SHA-512 und/oder andere, vorzugsweise kryptologische (also kollisionsresistente), Hashfunktionen. Dadurch ist eine besonders hohe Manipulationssicherheit gegeben. Details zu gemäß weiteren bevorzugten Ausführungsformen beispielhaft verwendbaren Hashfunktionen sind unter http://dx.doi.org/10.6028/NIST.FIPS.180-4 angegeben.

Bei weiteren bevorzugten Ausführungsformen kann das Bilden 222 der Prüfsumme insbesondere das Bilden einer CRC-Prüfsumme und/oder einer Hashfunktion oder dergleichen umfassen, wobei insbesondere die Hashfunktion nicht notwendigerweise kollisionsresistent ist. Dadurch kann eine besonders effiziente Bildung der Prüfgröße PG erfolgen, die bei weiteren bevorzugten Ausführungsformen zumindest in einigen Implementierungen der Vorrichtung 300 bzw. einer sonstigen Vorrichtung, die zur Ausführung des Verfahrens gemäß den Ausführungsformen ausgebildet ist, weniger Rechenressourcen benötigt als das Anwenden von kryptologischen Hashfunktionen.

Bei weiteren bevorzugten Ausführungsformen kann die Auswahl, welches bzw. welche der vorstehend genannten Verfahren zur Bildung der Prüfgröße PG, verwendet werden, auch dynamisch, also während der Laufzeit der Vorrichtung 300, getroffen werden. Dadurch ist es möglich, flexibel die zur Verfügung stehenden Freiheitsgrade zur Bildung der Prüfgröße PG auszuschöpfen, beispielsweise zur Anpassung an vorgebbare Randbedingungen wie Rechenzeitressourcen und/oder Speicher der Vorrichtung 300 bzw. Sicherheitserfordernisse. Bei weiteren bevorzugten Ausführungsformen ist es ferner möglich, zeitweise ein erstes Verfahren zur Bildung der Prüfgröße PG zu verwenden, beispielsweise eine kryptologischen Hashfunktion, z.B. SHA-256, und zeitweise eine demgegenüber vergleichsweise einfach auswertbare CRC-Prüfsumme zur Bildung der Prüfgröße PG zu verwenden. Hierbei ist es gemäß weiteren bevorzugten Ausführungsformen vorteilhaft, wenn jeweils entsprechende Referenz-Prüfgrößen RPG (Fig. 2A) für die verschiedenen zur Verwendung kommenden Verfahren zur Bildung der Prüfgröße vorliegen bzw. ermittelt werden können.

Bei weiteren bevorzugten Ausführungsformen ist vorgesehen, dass das Bilden der Prüfgröße PG folgende Schritte aufweist, vgl. das vereinfachte Flussdiagramm aus Fig. 8B: Bilden 228 einer primären Prüfgröße PG1 in Abhängigkeit der in dem wenigstens einen ersten Teilbereich 110_1 gespeicherten Daten D (Fig. 1A), vorzugsweise in Abhängigkeit von in mehreren Teilbereichen 110_1, 110_2 (Fig. 1B) gespeicherten Daten, Bilden 229 (Fig. 8B) einer sekundären Prüfgröße PG2 wenigstens in Abhängigkeit der primären Prüfgröße PG1.

Bei weiteren bevorzugten Ausführungsformen umfasst das Bilden 228 der primären Prüfgröße PG1 beispielsweise das Bilden einer Prüfsumme, insbesondere einer CRC-Prüfsumme und/oder das Auswerten einer, vorzugsweise nicht kryptologischen, Hashfunktion, beispielsweise einer MD5 (Message Digest 5)-Hashfunktion. Dadurch kann die primäre Prüfgröße PG1 mit vergleichsweise geringem Ressourcenaufwand effizient ermittelt werden, und zur Steigerung der Manipulationssicherheit kann die sekundäre Prüfgröße PG2 beispielsweise unter Verwendung einer kryptologischen Hashfunktion, zum Beispiel SHA-256, gebildet werden, wobei dieses Bilden bevorzugt in Abhängigkeit der primären Prüfgröße PG1 erfolgt. Bei weiteren bevorzugten Ausführungsformen kann die sekundäre Prüfgröße PG2 auch in Abhängigkeit von der primären Prüfgröße PG1 sowie wenigstens einem mit dem Prüfmuster PM assoziierten Teilbereich 110_1 des Speicherbereichs 110 gebildet werden. Dadurch ist bei weiteren bevorzugten Ausführungsformen eine zumindest teilweise zweistufige Bildung der Prüfgröße, nämlich der sekundären Prüfgröße PG2, ermöglicht, die neben der primären Prüfgröße PG1 optional auch direkt Daten beispielsweise des mit dem Prüfmuster PM assoziierten Teilbereichs 110_1 berücksichtigt. Die Erzeugung der primären Prüfgröße PG1 kann bei weiteren bevorzugten Ausführungsformen auch als "Datenkompression" und/oder "Datenreduktion" der zur Bildung der primären Prüfgröße PG1 verwendeten Eingangsdaten interpretiert werden, da die primären Prüfgröße PG1 selbst bei weiteren bevorzugten Ausführungsformen wesentlich kleiner sein kann als die zu Ihrer Ermittlung berücksichtigten Eingangsdaten. Dadurch kann vorteilhaft die der Bildung der sekundären Prüfgröße zugrunde zu legende Datenmenge reduziert werden.

Bei weiteren bevorzugten Ausführungsformen ist vorgesehen, dass das Bilden 202 (Fig. 2A) der Prüfgröße PG folgende Schritte aufweist, vergleiche das vereinfachte Flussdiagramm aus Figur 9: Auswählen 230 einer ersten Anzahl von Teilbereichen des Speicherbereichs 110 (Fig. 1A) der Speichereinrichtung 100, Auswählen 232 einer zweiten Anzahl von Teilbereichen des Speicherbereichs 110 der Speichereinrichtung 100, die insbesondere von der ersten Anzahl verschieden sind, Bilden 234 einer bzw. der primären Prüfgröße PG1 für die erste Anzahl von Teilbereichen des Speicherbereichs 110, Bilden 236 einer bzw. der sekundären Prüfgröße PG2 für die zweite Anzahl von Teilbereichen des Speicherbereichs, wobei optional das Bilden 236 der sekundären Prüfgröße PG2 zusätzlich für wenigstens einen Teil der primären Prüfgröße PG1 ausgeführt wird. Dadurch können vorteilhaft unterschiedliche Prüfgrößen (z.B. auch mittels unterschiedlichen Verfahren) für die verschiedenen Teilbereiche gebildet werden, wodurch vorteilhaft z.B. ein Rechenaufwand und/oder eine Manipulationssicherheit flexibel, insbesondere auch dynamisch (also während der Laufzeit der Vorrichtung 300), steuerbar ist. Beispielsweise kann bei weiteren bevorzugten Ausführungsformen vorgesehen sein, die erste Anzahl von Teilbereichen mit einer vergleichsweise wenig rechenaufwendig ermittelbaren ersten Prüfgröße PG1 zu assoziieren, und die zweite Anzahl von Teilbereichen mit einer zweiten Prüfgröße PG2 zu assoziieren, die einen größeren Rechenaufwand erfordert (z.B. SHA-256). Durch die Auswahl der ersten Anzahl und der zweiten Anzahl bzw. des Verhältnisses der ersten Anzahl zu der zweiten Anzahl kann vorteilhaft der Rechenaufwand und/oder die Manipulationssicherheit gesamten Verfahrens gesteuert werden und beispielsweise, bei weiteren bevorzugten Ausführungsformen, ein einen aktuellen Betriebszustand der Vorrichtung 300 bzw. eine Auslastung der Recheneinrichtung 302, angepasst werden. Besonders bevorzugt sind die Daten, die in die Bildung der ersten Prüfgröße PG1 und die Bildung der zweiten Prüfgröße PG2 einfließen, z.B. mit dem Prüfmuster PM assoziiert.

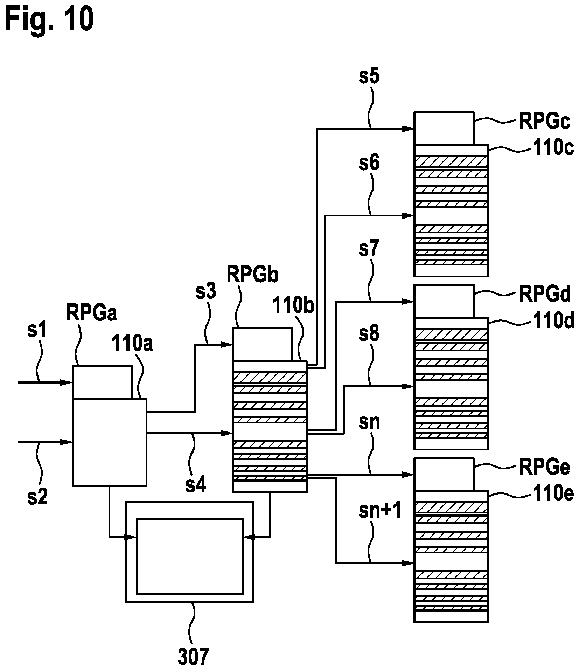

Figur 10 zeigt schematisch ein vereinfachtes Flussdiagramm eines Verfahrens gemäß weiteren bevorzugten Ausführungsformen. Vorliegend werden beispielhaft insgesamt fünf Speicherbereiche 110a, 110b, 110c, 110d, 110e betrachtet, die beispielsweise jeweils einen Teil der Speichereinrichtung 100 (Fig. 1A, 12) bilden. Jedem der insgesamt fünf Speicherbereiche 110a, 110b, 110c, 110d, 110e ist eine eigene Referenz-Prüfgröße RPGa, RPGb, RPGc, RPGd, RPGe zugeordnet, die beispielsweise während einer Fertigung der Speichereinrichtung 100 gemäß den vorstehend beschriebenen Ausführungsformen ermittelt und in einem gesicherten Speicherbereich beispielsweise eines Hardware-Sicherheitsmoduls 307 (vgl. auch Fig. 12) gespeichert worden ist. Bei weiteren bevorzugten Ausführungsformen können auch die zugehörigen Prüfmuster zur Ermittlung der jeweiligen Referenz-Prüfgröße RPGa, RPGb, RPGc, RPGd, RPGe in dem Hardware-Sicherheitsmodul 307 gespeichert sein. Bei weiteren bevorzugten Ausführungsformen kann das Prüfmuster z.B. auch (insbesondere vollständig) in dem Hardware-Sicherheitsmodul 307 gebildet werden bzw. gespeichert sein, und das Hardware-Sicherheitsmodul 307 kann z.B. auch zur Ermittlung der Prüfgröße(n) ausgebildet sein.

Der erste Speicherbereich 110a enthält vorliegend beispielhaft einen Bootloader, also ein Computerprogramm, das einen Startprozess der Recheneinrichtung 302 bzw. der Vorrichtung 300 steuert und beispielsweise festlegt, welche weiteren Computerprogramme nach dem Startprozess ausgeführt werden. Der zweite Speicherbereich 110b repräsentiert Computerprogramme und/oder Daten eines Betriebssystems für die Vorrichtung 300 bzw. ihre Recheneinrichtung 302, und die weiteren Speicherbereiche 110c, 110d, 110e beispielsweise Anwendungsprogramme für die Vorrichtung 300.

Zu Beginn des Startprozesses wird in Schritt s1 zunächst eine (aktuelle) Prüfgröße für den Speicherbereich 110a, in dem der Bootloader angesiedelt ist, ermittelt und sodann mit der Referenz-Prüfgröße RPGa verglichen. Bei einer Übereinstimmung kann auf eine Unversehrtheit des Bootloaders geschlossen werden, der daraufhin in Schritt s2 gestartet wird. Der Bootloader bildet sodann in Schritt s3 eine aktuelle Prüfgröße für den nächsten Speicherbereich 110b, der das Betriebssystem enthält, und vergleicht die aktuell gebildete Prüfgröße mit der entsprechenden Referenz-Prüfgröße RPGb. Bei einer Übereinstimmung der aktuell gebildeten Prüfgröße mit der Referenz-Prüfgröße RPGb für den Speicherbereich 110b wird darauf geschlossen, dass die Computerprogramme und/oder Daten des Betriebssystems unversehrt, also nicht manipuliert, sind, und ein entsprechendes Computerprogramm des Betriebssystems wird in Schritt s4 zur Ausführung gebracht. Nachfolgend erfolgt mittels der Schritte s5, s6, s7, s8, sn, sn+1 jeweils ein analoger Vorgang für die weiteren Speicherbereiche 110c, 110d, 110e, jeweils unter Verwendung der entsprechend zugeordneten Referenz-Prüfgröße RPGc, RPGd, RPGe.

Bei dem vorstehend unter Bezugnahme auf Figur 10 beschriebenen Ausführungsbeispiel ist der den Bootloader enthaltende Speicherbereich 110a vorzugweise vollständig überprüft worden bzw. unter Verwendung eines Prüfmusters geprüft worden, das den gesamten Speicherbereich 110a abdeckt. Bei weiteren bevorzugten Ausführungsformen kann auch der den Bootloader enthaltende Speicherbereich 110a mittels eines Prüfmusters überprüft werden, dass nicht dem gesamten Speicherbereich 110a abdeckt, wie es vorliegend beispielhaft für die weiteren Speicherbereiche 110b, 110c, 110d, 110e der Fall ist.

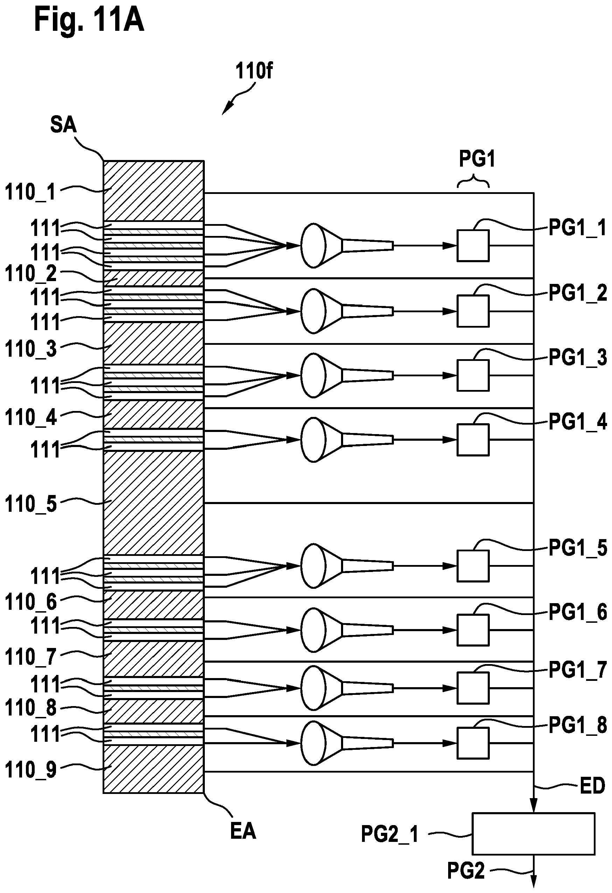

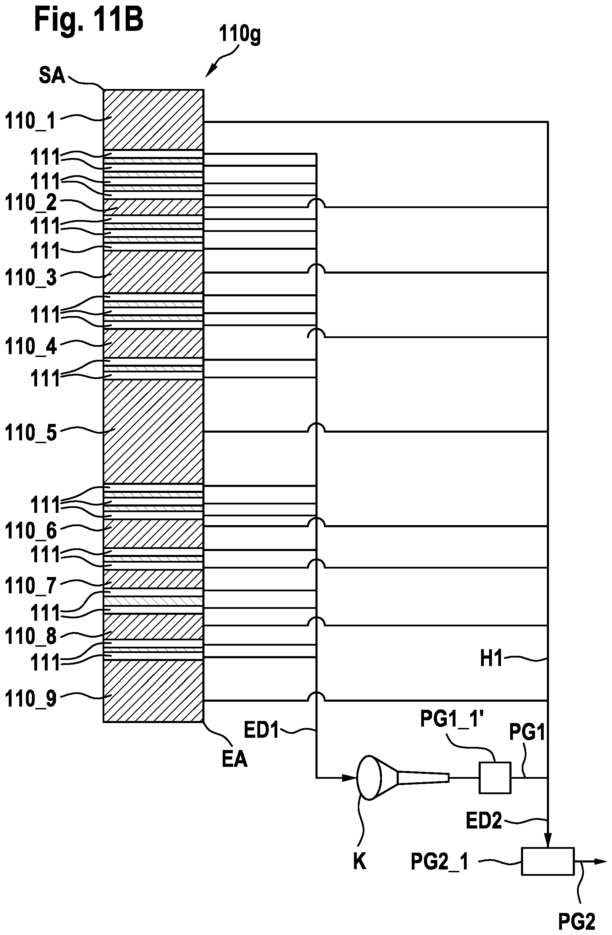

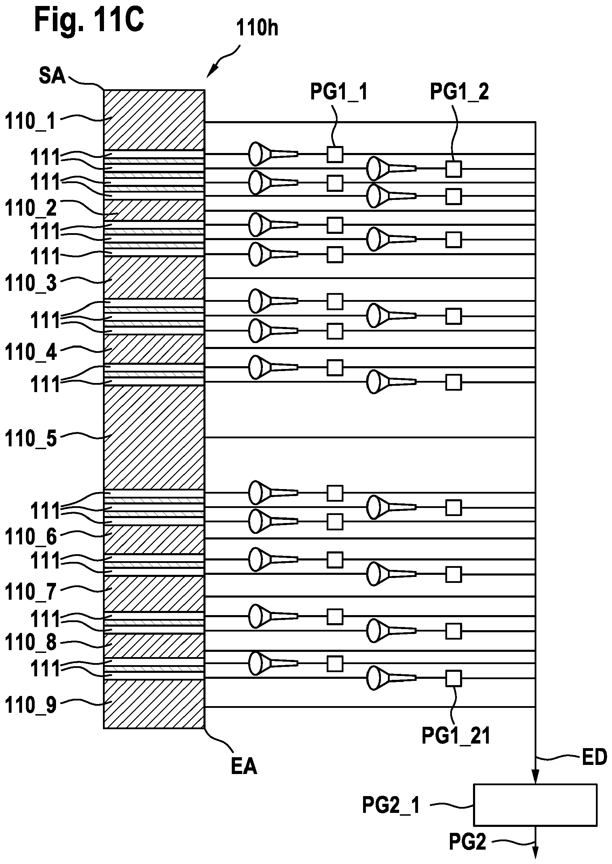

Figur 11A, 11B, 11C zeigen jeweils schematisch (und nicht maßstabsgetreu) ein vereinfachtes Flussdiagramm eines Verfahrens gemäß weiteren bevorzugten Ausführungsformen.

Bei der in Figur 11A abgebildeten Konfiguration ist ein Prüfmuster vorgesehen, das eine erste Anzahl von mehreren nicht zusammenhängenden Teilbereichen 110_1, 110_2, .., 110_9 des gesamten Speicherbereichs 110f charakterisiert. Weiter charakterisiert das Prüfmuster eine zweite Anzahl von weiteren Teilbereichen, die der Übersichtlichkeit halber kollektiv mit dem Bezugszeichen 111 versehen sind. Beispielsweise befinden sich zwischen den Teilbereichen 110_1, 110_2 vorliegend vier einzelne weitere Teilbereiche 111, zwischen den Teilbereichen 110_2, 110_3 vorliegend drei einzelne weitere Teilbereiche 111, usw. Die in Fig. 11A nicht bezeichneten Bereiche des Speicherbereichs 110f sind nicht von dem Prüfmuster erfasst. Vorliegend sind acht Funktionsblöcke PG1_1, PG1_2, .., PG1_8 vorgesehen, die jeweils einen Teil einer primären Prüfgröße PG1 in Abhängigkeit der Dateninhalte der ihnen zugeordneten Speicherbereiche 111 bilden. Beispielsweise bildet der Funktionsblock PG1_1 einen ersten Teil der primären Prüfgröße PG1 in Abhängigkeit der vier einzelnen weiteren Teilbereiche 111 zwischen den Speicherbereichen 110_1, 110_2, der Funktionsblock PG1_2 einen zweiten Teil der primären Prüfgröße PG1 in Abhängigkeit der drei einzelnen weiteren Teilbereiche 111 zwischen den Speicherbereichen 110_2, 110_3, usw. Die primäre Prüfgröße PG1 kann somit als 8-Tupel der jeweils durch die Funktionsblöcke PG1_1, .., PG1_8 gebildeten Ausgangswerte charakterisiert werden. Bei weiteren bevorzugten Ausführungsformen ist vorgesehen, dass eine sekundäre Prüfgröße PG2 in Abhängigkeit sowohl der primären Prüfgröße PG1 als auch eines Dateninhalts der ersten Anzahl von Teilbereichen 110_1, 110_2, .., 110_9 gebildet wird, was vorliegend beispielsweise mittels des Funktionsblocks PG2_1 realisierbar ist. Die sekundäre Prüfgröße PG2 kann beispielsweise als Referenz-Prüfgröße RPG (Fig. 2A) für eine spätere Verwendung gespeichert werden oder als aktuelle sekundäre Prüfgröße PG2 z.B. für einen Vergleich mit einer zuvor gespeicherten Referenz-Prüfgröße RPG verwendet werden.

Bei weiteren bevorzugten Ausführungsformen können die Funktionsblöcke PG1_1, .., PG1_8 beispielsweise dazu ausgebildet sein, eine CRC-Prüfsumme über ihre Eingangsdaten bilden, z.B. eine 32 bit aufweisende CRC-Prüfsumme, was eine besonders effiziente Ermittlung der primären Prüfgröße als 8-Tupel von den dabei erhaltenen CRC-Prüfsummen ermöglicht. Bei weiteren bevorzugten Ausführungsformen ist der Funktionsblock PG2_1 dazu ausgebildet, eine kryptologische Hashfunktion, z.B. SHA-256, auf die ihm zugeführten Eingangsdaten ED anzuwenden, was auf die sekundäre Prüfgröße PG2 führt. Bei weiteren bevorzugten Ausführungsformen können die Eingangsdaten ED beispielsweise als Konkatenation (Verkettung) der Ausgangswerte der Funktionsblöcke PG1_1, .., PG1_8 und der Daten der ersten Anzahl von Teilbereichen 110_1, 110_2, .., 110_9 gebildet werden.

Bei der in Figur 11B abgebildeten Konfiguration ist, analog zu Fig. 11A, ein Prüfmuster vorgesehen, das eine erste Anzahl von mehreren nicht zusammenhängende Teilbereiche 110_1, 110_2, .., 110_9 des gesamten Speicherbereichs 110g charakterisiert. Weiter charakterisiert das Prüfmuster, insoweit ebenso analog zu Fig. 11A, eine zweite Anzahl von weiteren Teilbereichen, die der Übersichtlichkeit halber kollektiv mit dem Bezugszeichen 111 versehen sind. Wie schon bei den Ausführungsformen gemäß Fig. 11A sind die in Fig. 11B nicht bezeichneten Bereiche des Speicherbereichs 110g nicht von dem Prüfmuster erfasst. Im Unterschied zu der Konfiguration gemäß Figur 11A ist bei der Konfiguration gemäß Figur 11B ein einziger Funktionsblock PG1_1' vorgesehen, dem als erste Eingangsdaten ED1 die Daten der weiteren Teilbereiche 111 zuführbar sind, beispielsweise wiederum als Konkatenation, vgl. das Element K, der Daten der einzelnen Teilbereiche 111. Der Funktionsblock PG1_1' bildet die erste Prüfgröße PG1 in Abhängigkeit der ersten Eingangsdaten ED1, beispielsweise wiederum unter Verwendung einer CRC-Prüfsumme oder einer vergleichsweise wenig aufwändigen, insbesondere nicht kryptologischen bzw. nicht kollisionsfreien, Hashfunktion. Die erste Prüfgröße PG1 wird sodann mit den Dateninhalten der ersten Anzahl von Teilbereichen 110_1, 110_2, .., 110_9 kombiniert, beispielsweise konkateniert, was auf zweite Eingangsdaten ED2 führt, die durch den weiteren Block PG2_1, beispielsweise unter Anwendung einer weiteren, vorzugweise kryptologischen, Hashfunktion, zum Beispiel SHA-256, in die zweite Prüfgröße PG2 transformiert werden.

Bei der in Figur 11C abgebildeten Konfiguration ist, analog zu Fig. 11A und 11B, ein Prüfmuster vorgesehen, das eine erste Anzahl von mehreren nicht zusammenhängenden Teilbereiche 110_1, 110_2, .., 110_9 des gesamten Speicherbereichs 110h charakterisiert. Weiter charakterisiert das Prüfmuster, insoweit ebenso analog zu Fig. 11A, 11B, eine zweite Anzahl von weiteren Teilbereichen, die der Übersichtlichkeit halber kollektiv mit dem Bezugszeichen 111 versehen sind. Wie schon bei den Ausführungsformen gemäß Fig. 11A, 11B, sind die in Fig. 11C nicht bezeichneten Bereiche des Speicherbereichs 110h nicht von dem Prüfmuster erfasst. Im Unterschied zu der Konfiguration gemäß Figur 11A, 11B ist bei der Konfiguration gemäß Figur 11C jedem weiteren Teilbereich 111 ein eigener Funktionsblock zur Bildung einer primären Prüfgröße, beispielsweise im Wege der Bildung einer CRC- Prüfsumme, zugeordnet, von denen in Figur 11C der Übersichtlichkeit halber jedoch nur die drei Blöcke PG1_1, PG1_2, und PG1_21 bezeichnet sind. Die Ausgangswerte der Funktionsblöcke PG1_1, PG1_2, .., PG1_21 werden kombiniert, bevorzugt zusammen mit den Dateninhalten der ersten Anzahl von Teilbereichen 110_1, 110_2, .., 110_9, wobei das Kombinieren bevorzugt ein Konkatenieren umfassen kann, und der Funktionsblock PG2_1 wendet eine, vorzugsweise kryptologischen, Hashfunktion, z.B. SHA-512, auf die ihm zugeführten Eingangsdaten ED an.

Alternativ oder ergänzend zu den vorstehend beispielhaft genannten Prüfsummen bzw. Hashfunktionen können bei weiteren bevorzugten Ausführungsformen auch Nachrichtenauthentifizierungscodes (z.B. MAC, CMAC) und/oder Signaturen verwendet werden, um wenigstens eine der Prüfgrößen PG, PG1, PG2 zu ermitteln.

Weitere bevorzugte Ausführungsformen beziehen sich auf eine Verwendung des Verfahrens gemäß den Ausführungsformen vor und/oder nach und/oder während wenigstens einer der folgenden Betriebsphasen einer Recheneinrichtung 302 (Fig. 12), die dazu ausgebildet ist, auf die Speichereinrichtung 100 zuzugreifen: a) Starten der Recheneinrichtung 302 aus einem ausgeschalteten Zustand ("Booten"), b) (erneutes) Starten der Recheneinrichtung 302 aus einem Energiesparzustand, insbesondere einem suspend-to-RAM-Zustand, c) Starten der Recheneinrichtung aus einem Rücksetzzustand, reset, insbesondere einem soft-reset, d) Normalbetrieb.

Dadurch kann vorteilhaft ein Speicherinhalt der Speichereinrichtung 100 z.B. vor dem Starten ("Booten") bzw. einem Hochfahren aus einem suspend-to-RAM-Zustand oder auch während des Normalbetriebs auf einen ordnungsgemäßen Inhalt hin überprüft werden, was auch als "runtime manipulation detection", also Manipulationserkennung zur Laufzeit, bezeichnet werden kann.

Weitere bevorzugte Ausführungsformen beziehen sich auf eine Vorrichtung 300 (Fig. 12) zum Verarbeiten von in einer Speichereinrichtung gespeicherten Daten, wobei die Vorrichtung 300 dazu ausgebildet ist, das Verfahren gemäß den Ausführungsformen auszuführen.

Weitere bevorzugte Ausführungsformen beziehen sich auf ein Verfahren zum Bilden eines Prüfmusters PM (Fig. 12), das wenigstens einen ersten Teilbereich 110_1 (Fig. 1A) eines Speicherbereichs 110 einer bzw. der Speichereinrichtung 100 zur Speicherung von Daten D charakterisiert, wobei das Prüfmuster PM zufallsabhängig oder pseudozufallsabhängig gebildet wird. Bei weiteren bevorzugten Ausführungsformen ist vorgesehen, dass das Verfahren zum Bilden des Prüfmusters PM durch die vorstehend beschriebene Vorrichtung 300 gemäß den Ausführungsformen ausgeführt wird. Bei weiteren bevorzugten Ausführungsformen kann das Verfahren zum Bilden des Prüfmusters PM jedoch (auch) durch andere Einheiten 400 ausgeführt werden, die das gebildete Prüfmuster PM dann beispielsweise der Vorrichtung 300 gemäß den Ausführungsformen zur Verfügung stellen, bevorzugt über einen sicheren Kanal, z.B. in einer geschützten Fertigungsumgebung, in der die Vorrichtung 300 gemäß den Ausführungsformen hergestellt wird.

Bei weiteren bevorzugten Ausführungsformen kann das Verfahren gemäß den Ausführungsformen beispielsweise durch die Recheneinrichtung 302 ausgeführt werden. Alternativ oder ergänzend kann das Verfahren gemäß den Ausführungsformen wenigstens teilweise durch ein optionales Hardware-Sicherheitsmodul 307 ausgeführt werden, das bei weiteren bevorzugten Ausführungsformen in die Vorrichtung 300 integrierbar, insbesondere auch auf einem selben Halbleitersubstrat wie die Recheneinrichtung 302 und/oder die weitere Speichereinrichtung 304 anordenbar ist.

Bei weiteren bevorzugten Ausführungsformen kann das Hardware-Sicherheitsmodul 307 eine Programmierschnittstelle (API) aufweisen bzw. bereitstellen, sodass ein durch die Recheneinrichtung 302 ausgeführtes Computerprogramm zur Ausführung des Verfahrens gemäß den Ausführungsformen mittels der Programmierschnittstelle entsprechende Funktionen des Hardware-Sicherheitsmoduls 307 aufrufen kann, um wenigstens manche Schritte des Verfahrens gemäß den Ausführungsformen, beispielsweise die Auswertung einer Hashfunktion, mittels des Hardware-Sicherheitsmoduls 307 auszuführen. Bei weiteren bevorzugten Ausführungsformen ist dies insbesondere dann vorteilhaft, wenn die Ermittlung bzw. Bildung der Prüfgröße PG auf MAC bzw. CMAC bzw. Signaturen beruht oder generell in solchen Fällen, in denen wenigstens ein geheimer Schlüssel oder ein geteiltes Geheimnis oder dergleichen verwendet werden soll.

Bei weiteren bevorzugten Ausführungsformen kann ein Computerprogramm, das zur Ausführung des Verfahrens gemäß den Ausführungsformen ausgebildet ist, beispielsweise auch in einem nur-lese-Speicher, beispielsweise einem ROM und/oder einem OTP (one time programmable, einmalig programmierbarer Speicher) gespeichert sein.

Bei weiteren bevorzugten Ausführungsformen ist vorgesehen, dass für wenigstens zwei unterschiedliche Speicherbereiche 110a, 110b, 110c, 110d, 110e (Fig. 10) jeweils unterschiedliche Prüfmuster PM vorgesehen sind. Dadurch ist ein weiterer Freiheitsgrad gegeben. Beispielsweise kann für einen den Bootloader aufweisenden Speicherbereich 110a eine vergleichsweise gründliche Prüfung mit einem entsprechend detaillierten bzw. umfassenden Prüfmuster PM vorgesehen sein, während für andere Speicherbereiche 110c, 110d weniger umfassende Prüfmuster vorgesehen sind, die beispielsweise einen geringeren Bereich des betreffenden Speicherbereichs abdecken.

Bei weiteren bevorzugten Ausführungsformen ist vorgesehen, dass in Abhängigkeit von in den unterschiedlichen Speicherbereichen gespeicherten Computerprogrammen und/oder Daten ein jeweiliges Prüfmuster für den betreffenden Speicherbereichs gewählt wird.

Bei weiteren bevorzugten Ausführungsformen kann die Ermittlung 200, insbesondere Bildung 200a, wenigstens eines Prüfmusters vorteilhaft dynamisch, also während der Laufzeit der Vorrichtung 300, bei weiteren bevorzugten Ausführungsformen auch wiederholt, insbesondere periodisch, erfolgen. Bei weiteren bevorzugten Ausführungsformen kann die Ermittlung 200, insbesondere Bildung 200a wenigstens eines Prüfmusters zu einer oder mehreren der folgenden Gelegenheiten erfolgen: Abschluss der Fertigung der Vorrichtung 300, Abschluss eines Startvorgangs bzw. des Bootens der Vorrichtung 300, während eines Nachlaufs, insbesondere bevor die Vorrichtung 300 deaktiviert wird. Die vorstehend genannten Ausführungsformen gelten in entsprechender Weise auch für die Ermittlung der wenigstens einen Prüfgröße in Abhängigkeit des betreffenden Prüfmusters.

Bei weiteren bevorzugten Ausführungsformen ist vorgesehen, dass ein ermitteltes oder erzeugtes Prüfmuster nur einmal verwendet wird. Danach kann gegebenenfalls wenigstens ein weiteres Prüfmuster ermittelt, insbesondere gebildet werden. Bei weiteren bevorzugten Ausführungsformen kann die Prüfgröße PG bzw. eine zugeordnete Referenz-Prüfgröße in entsprechender Weise ebenfalls nur einmal verwendet werden.

Bei weiteren bevorzugten Ausführungsformen ist vorgesehen, dass eine Referenz-Prüfgröße RPG in einen einmal programmierbaren Speicher (OTP) geschrieben wird, aus dem die Vorrichtung 300 die Referenz-Prüfgröße dann bei Bedarf lesen kann. Dies kann insbesondere dann vorteilhaft sein, wenn die Vorrichtung 300 nicht über ein optionales Hardware-Sicherheitsmodul 307 verfügt.

Bei weiteren bevorzugten Ausführungsformen kann vorgesehen sein, den Speicherbereich 110 bzw. den wenigstens einen ersten Teilbereich 110_1 aus der Speichereinrichtung 100 in einen Arbeitsspeicher 304a (Fig. 12) zu kopieren, um das Verfahren gemäß den Ausführungsformen mit den kopierten Daten auszuführen, beispielsweise um die Prüfgröße in Abhängigkeit der kopierten Daten zu bilden. Bei weiteren bevorzugten Ausführungsformen kann Verfahren gemäß den Ausführungsformen auch direkt auf in der Speichereinrichtung 100 befindliche Daten angewandt werden, insbesondere dann, wenn die Speichereinrichtung 100 Speicherzellen basierend auf der NOR-Flash-Technologie aufweist.

Bei weiteren bevorzugten Ausführungsformen kann die Vorrichtung 300 als Steuergerät, insbesondere für ein Kraftfahrzeug, beispielsweise für eine Brennkraftmaschine eines Kraftfahrzeugs, ausgebildet sein. Bei weiteren bevorzugten Ausführungsformen ist die Anwendung des Prinzips gemäß den Ausführungsformen jedoch nicht auf den Kraftfahrzeugbereich bzw. den Bereich von Steuergeräten beschränkt.

Bei weiteren bevorzugten Ausführungsformen kann das Verfahren gemäß den Ausführungsformen auch mit anderen Verfahren zur Überprüfung der Speichereinrichtung 100 kombiniert werden. Beispielsweise kann die Speichereinrichtung 100 zumindest zeitweise gemäß den vorstehend beschriebenen Ausführungsformen überprüft werden, beispielsweise durch Ermitteln eines Prüfmusters, Bilden einer Referenz-Prüfgröße und, gegebenenfalls später, Bilden einer aktuellen Prüfgröße unter Verwendung desselben Prüfmusters, Vergleichen der aktuellen Prüfgröße mit der Referenz-Prüfgröße, und zeitweise kann die Speichereinrichtung 100 auch mit anderen Prüfverfahren geprüft werden, beispielsweise solchen Verfahren, bei denen ein Prüfmuster nicht (pseudo-)zufallsbasiert gebildet wird.

Ein bedeutender Vorteil des Prinzips gemäß den Ausführungsformen ist die Tatsache, dass das Prüfmuster nicht deterministisch ist, mithin ein Angreifer nicht vorhersagen kann, welche Bereiche der Speichereinrichtung 100 mittels des Prüfmusters gemäß den Ausführungsformen überprüft werden. Ein weiterer besonderer Vorteil besteht darin, dass einzelne Vorrichtungen 300 jeweils individuelle Prüfmuster PM und/oder Prüfmusterbasisdaten PMB ermitteln und/oder bilden und/oder nutzen können sodass beispielsweise die betreffenden Prüfmuster und/oder Prüfmusterbasisdaten nur innerhalb der Vorrichtung 300 bekannt sind, was Manipulationen weiter erschwert. Ein weiterer Vorteil des Prinzips gemäß den Ausführungsformen ist die Möglichkeit, einen zu überprüfenden Speicherbereich flexibel vorzugeben, was beispielsweise durch die Dimensionierung des Prüfmusters PM bewerkstelligbar ist. Ferner ist vorteilhaft eine "Prüfdichte" dynamisch einstellbar, also der Anteil des durch das Prüfmuster PM abgedeckten Speicherbereichs an dem gesamten Speicherbereich der Speichereinrichtung 100. Darüber hinaus sind bei weiteren bevorzugten Ausführungsformen auch Wartezeiten zwischen aufeinanderfolgenden Wiederholungen bzw. erneuten Ausführung des Verfahrens gemäß den Ausführungsformen flexibel einstellbar, was eine genaue Einstellung einer zeitlichen Prüfdichte ermöglicht. Weiteren bevorzugten Ausführungsformen können beispielsweise auch unterschiedliche Teilbereiche 110_1, 110_2 einer Speichereinrichtung unterschiedlich oft bzw. mit unterschiedlich großen Prüfmustern überprüft werden.

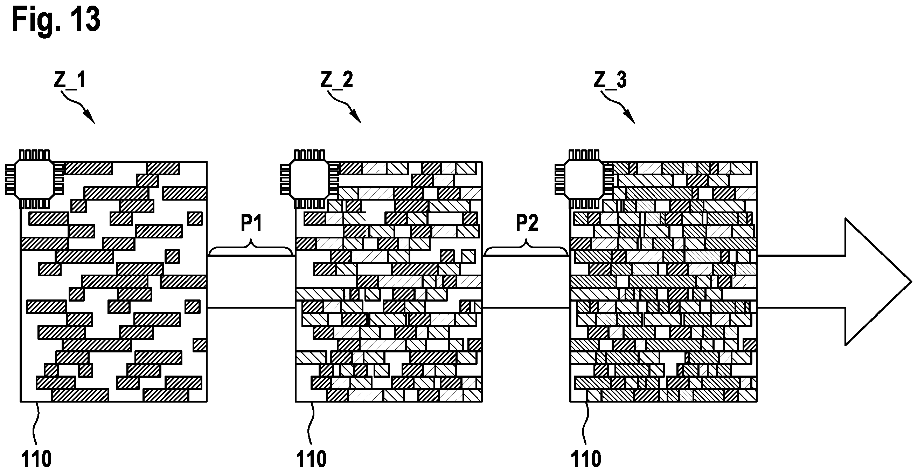

Figur 13 zeigt schematisch ein vereinfachtes Blockdiagramm gemäß weiteren bevorzugten Ausführungsformen. Abgebildet ist ein Speicherbereich 110 der Speichereinrichtung 100 (Figur 1A) in drei unterschiedlichen Betriebszuständen Z_1, Z_2, Z_3. Der erste Betriebszustand Z_1 ist dadurch charakterisiert, dass in Figur 13 nicht näher bezeichnete, als Rechtecke angedeutete Teilbereiche mittels eines ersten (pseudo-)zufällig gebildeten Prüfmusters überprüft worden sind, beispielsweise unter Vergleichen einer mittels des ersten Prüfmusters erhaltenen ersten Prüfgröße mit einer entsprechenden, gegebenenfalls zuvor gebildeten Referenz-Prüfgröße. Ein verbleibender, nicht überprüfter Bereich ist schraffiert.

Der zweite Betriebszustand Z_2 ist dadurch charakterisiert, dass in Figur 13 nicht näher bezeichnete weitere Teilbereiche mittels eines zweiten (pseudo-)zufällig gebildeten Prüfmusters überprüft worden sind, beispielsweise unter Vergleichen einer mittels des zweiten Prüfmusters erhaltenen zweiten Prüfgröße mit einer entsprechenden, gegebenenfalls zuvor gebildeten Referenz-Prüfgröße. Der dritte Betriebszustand Z_3 ist dadurch charakterisiert, dass in Figur 13 nicht näher bezeichnete weitere Teilbereiche mittels eines dritten (pseudo-)zufällig gebildeten Prüfmusters überprüft worden sind, beispielsweise unter Vergleichen einer mittels des dritten Prüfmusters erhaltenen dritten Prüfgröße mit einer entsprechenden, gegebenenfalls zuvor gebildeten Referenz-Prüfgröße. Zwischen dem ersten Betriebszustand Z_1 und dem zweiten Betriebszustand Z_2, vgl. die Phase P1, kann eine bzw. die auf die Speichereinrichtung 100 zugreifende Vorrichtung 300 beispielsweise inaktiv sein, beispielsweise durch Deaktivierung bzw. Einnehmen eines Suspend-to-RAM-Zustands oder eines sonstigen Energiesparzustands. Zwischen dem zweiten Betriebszustand Z_2 und dem dritten Betriebszustand Z_3, vgl. die Phase P2, kann die auf die Speichereinrichtung 100 zugreifende Vorrichtung 300 beispielsweise erneut inaktiv sein, beispielsweise durch Deaktivierung bzw. Einnehmen eines Suspend-to-RAM-Zustands oder eines sonstigen Energiesparzustands.

Nach dem Ende der Phase P1 wird die Vorrichtung 300 erneut aktiviert und führt sodann eine Überprüfung mittels des zweiten Prüfmusters aus, welches aufgrund seines nicht deterministischen Charakters die zumindest teilweise Überprüfung der zuvor nicht bereits mittels des ersten Prüfmusters überprüften Speicherbereiche bewirkt. Vergleichbares gilt für die weitere Überprüfung nach dem Ende der Phase P2. Auf diese Weise kann bei weiteren bevorzugten Ausführungsformen vorteilhaft sukzessive nahezu der gesamte Speicherbereich 110 der Speichereinrichtung 100 überprüft werden. Gleichzeitig ist der Bedarf an Ressourcen, insbesondere auch an Rechenzeit, flexibel steuerbar, insbesondere so, dass auch größere Speicherbereiche ohne Beeinträchtigungen eines Betriebs der Vorrichtung effizient überprüfbar sind.

Bei weiteren bevorzugten Ausführungsformen kann das zweite Prüfmuster für die Überprüfung während des zweiten Betriebszustands Z_2 beispielsweise durch die Vorrichtung 300 ermittelt werden, bevor sie zu dem Ende des ersten Betriebszustands Z_1 deaktiviert wird bzw. herunterfährt. Nach der Bildung wird das zweite Prüfmuster sicher, vorzugsweise innerhalb der Vorrichtung 300, gespeichert, und es wird mittels des zweiten Prüfmusters eine Prüfgröße ermittelt, die als Referenz-Prüfgröße für die Überprüfung während des zweiten Betriebszustands Z_2 verwendbar ist und ebenfalls in der Vorrichtung 300 gespeichert wird. Danach tritt die Vorrichtung 300 in die Phase P1 der Inaktivität ein, die sie für das Einnehmen des zweiten Betriebszustands Z_2 wieder verlässt. Sodann kann, insbesondere bevor ein Normalbetrieb während des zweiten Betriebszustands Z_2 (Ausführen von Anwendungsprogrammen und dergleichen) eingenommen wird, beispielsweise mittels eines Bootloaders, die zweite Überprüfung unter Verwendung des zuvor gebildeten zweiten Prüfmusters und der entsprechenden Referenz-Prüfgröße erfolgen. Die zweite Überprüfung kann beispielsweise die Bildung einer aktuellen Prüfgröße unter Verwendung des zweiten Prüfmusters und das Vergleichen der auf diese Weise erhaltenen aktuellen Prüfgröße mit der Referenz-Prüfgröße umfassen. Sofern eine Übereinstimmung der aktuellen Prüfgröße mit der Referenz-Prüfgröße festgestellt wird, kann aufgeschlossen werden, dass keine Manipulation der Speichereinrichtung erfolgt ist, die Daten mithin authentisch und integer sind. Andernfalls kann beispielsweise eine Fehlerreaktion eingeleitet werden. Für einen Zustandsübergang von dem zweiten Betriebszustand Z_2 zu dem dritten Betriebszustand Z_3 kann ein vergleichbarer Ablauf stattfinden. Da sich das Prüfmuster in den einzelnen Betriebszuständen laufend in nicht deterministische Weise ändert, kann ein Angreifer das Prüfmuster und damit die Grundlagen der Bildung der Prüfgröße nicht vorher sehen, so dass unerkannte Manipulationen der in der Speichereinrichtung 100 gespeicherten Daten nahezu unmöglich sind.

Bei weiteren bevorzugten Ausführungsformen kann das Verfahren gemäß den Ausführungsformen zumindest teilweise durch eine bzw. die Recheneinrichtung 302 und/oder ein ggf. vorhandenes Hardware-Sicherheitsmodul 307 ausgeführt werden. Beispielsweise können bei weiteren bevorzugten Ausführungsformen wenigstens manche der folgenden Schritte durch die Recheneinrichtung 302 und/oder das ggf. vorhandene Hardware-Sicherheitsmodul 307 ausgeführt werden: Speicherung des ersten oder zweiten geheimen Schlüssels respektive eines Hashwerts des ersten oder zweiten geheimen Schlüssels, Prozessierung des ersten oder zweiten geheimen Schlüssels, Bildung und/oder Speicherung des Prüfmusters PM bzw. der Prüfmuster-Basisdaten, Bildung und/oder Speicherung der Referenzprüfgröße basierend auf dem Prüfmuster bzw. der Prüfmuster-Basisdaten, Bildung und/oder Speicherung der aktuellen Prüfgröße basierend auf dem Prüfmuster bzw. der Prüfmuster-Basisdaten, Vergleich der aktuellen Prüfgröße mit der Referenzprüfgröße bzw. Verifikation der aktuellen Prüfgröße.

Bei weiteren bevorzugten Ausführungsformen werden das Prüfmuster PM bzw. die Prüfmuster-Basisdaten PMB und/oder die Referenzprüfgröße RPG nicht notwendiger Weise in einem internen Speicher z.B. der Recheneinrichtung 302 abgelegt, alternativ oder ergänzend können bei weiteren bevorzugten Ausführungsformen auch das Prüfmuster PM bzw. die Prüfmuster-Basisdaten PMB, z.B. in verschlüsselter Form, in einer externen Speichereinheit gespeichert werden, und/oder es kann ggf. ein für die Verschlüsselung eingesetzter Schlüssel oder ein Hashwert dieses Schlüssel in einem bzw. dem internen Speicher abgelegt werden. Ferner kann dieser Schlüssel bei weiteren bevorzugten Ausführungsformen vorzugsweise Device-/ Steuergeräte-(allgemein: Vorrichtungs-)individuell ausgeführt werden.

Bei weiteren bevorzugten Ausführungsformen kann die Referenzprüfgröße RPG, insbesondere in unverschlüsselter Form, in einer internen oder externen Speichereinheit gespeichert werden, insbesondere sofern: die Referenzprüfgröße RPG eine asymmetrische Signatur darstellt, und/oder die Referenzprüfgröße eine MAC darstellt.

Bei weiteren bevorzugten Ausführungsformen kann die Referenzprüfgröße RPG, insbesondere in verschlüsselter Form, in einer externen Speichereinheit gespeichert werden, insbesondere sofern die Referenzprüfgröße RPG einen kryptographischen Hash(wert) darstellt, wobei insbesondere für den für die Verschlüsselung eingesetzten Schlüssel dieselben oder vergleichbare Kriterien wie für die Verschlüsselung des Prüfmusters PM nutzbar sind (siehe Beschreibung oben).

## Patentansprüche

1. Verfahren zum Verarbeiten von in einer Speichereinrichtung (100) eines Steuergeräts für ein Kraftfahrzeug gespeicherten Daten, wobei das Verfahren durch eine Recheneinrichtung (302) durchgeführt wird, wobei der Recheneinrichtung (302) die Speichereinrichtung (100) zugeordnet ist, wobei das Verfahren die folgenden Schritte aufweist: Ermitteln (200) von wenigstens einem ersten Teilbereich (110_1) eines Speicherbereichs (110) der Speichereinrichtung (100) durch ein zufallsabhängig oder pseudozufallsabhängig gebildetes Prüfmuster (PM), indem wenigstens eine von Startadresse, Endadresse, Länge, Bitmaske bzw. Bytemaske zufallsabhängig und/oder pseudozufallsabhängig gewählt wird, Bilden (202) einer Prüfgröße (PG), die in Abhängigkeit der in dem wenigstens einen ersten Teilbereich (110_1) gespeicherten Daten (D) gebildet wird, Vergleichen (205) der Prüfgröße (PG; PG') mit einer gespeicherten Referenz-Prüfgröße (RPG) für den wenigstens einen ersten Teilbereich (110_1), wobei bei einer Abweichung der Prüfgröße (PG) von der Referenzprüfgröße (RPG) auf eine erfolgte Veränderung oder Manipulation der Daten des zugehörigen Teilbereichs (110_1), für die die Referenz-Prüfgröße (RPG) gebildet wurde, geschlossen wird.

2. Verfahren nach Anspruch 1, weiter aufweisend: a) zumindest zeitweises Speichern (204) der Prüfgröße (PG).

3. Verfahren nach wenigstens einem der vorstehenden Ansprüche, wobei das Ermitteln (200) des Prüfmusters (PM) wenigstens eines der folgenden Elemente aufweist: a) Empfangen (200b) des Prüfmusters (PM) von einer externen Einheit (400), b) Auslesen (200c) des Prüfmusters (PM) aus der Speichereinrichtung (100) und/oder einer weiteren Speichereinrichtung (304), c) Ableiten (200d) des Prüfmusters (PM) aus Prüfmusterbasisdaten (PMB), welche nicht bereits ein vollständiges Prüfmuster (PM) repräsentieren.

4. Verfahren nach Anspruch 3, wobei das Bilden (200a) des Prüfmusters (PM) folgende Schritte umfasst: Bereitstellen (210) einer zufälligen oder pseudozufälligen, vorzugsweise binären, Zahlenfolge (ZF; ZF`), Ermitteln (212) des wenigstens einen ersten Teilbereichs (110_1) in Abhängigkeit wenigstens eines ersten Teils (ZF1) der Zahlenfolge (ZF), wobei insbesondere eine Startadresse (SA1) des ersten Teilbereichs (110_1) in dem Speicherbereich (110) in Abhängigkeit des ersten Teils (ZF1) der Zahlenfolge (ZF) gebildet wird.

5. Verfahren nach wenigstens einem der vorstehenden Ansprüche, wobei das Prüfmuster (PM) zusätzlich zu dem ersten Teilbereich (110_1) wenigstens einen zweiten Teilbereich (110_2), vorzugsweise mehrere weitere Teilbereiche (110_3a, 110_3b, 110_3c, ..), charakterisiert, wobei bevorzugt der zweite Teilbereich (110_2), insbesondere der wenigstens eine weitere Teilbereich, nicht direkt an den ersten Teilbereich (110_1) grenzt und/oder einen nichtverschwindenden Abstand von dem ersten Teilbereich (110_1) aufweist.

6. Verfahren nach Anspruch 5, rückbezogen auf Anspruch 4, weiter aufweisend wenigstens eines der folgenden Elemente: a) Ermitteln (214a) des zweiten Teilbereichs (110_2) in Abhängigkeit eines zweiten Teils (ZF2) der Zahlenfolge (ZF), der von dem ersten Teil (ZF1) der Zahlenfolge (ZF) verschieden ist, wobei insbesondere eine Startadresse (SA2) des zweiten Teilbereichs (110_2) in dem Speicherbereich (110) in Abhängigkeit des zweiten Teils (ZF2) der Zahlenfolge (ZF) gebildet wird, b) Ermitteln (214b) der weiteren Teilbereiche (110_3a, 110_3b, 110_3c, ..) in Abhängigkeit eines jeweiligen entsprechenden weiteren Teils der Zahlenfolge (ZF), der insbesondere jeweils von dem ersten Teil (ZF1) der Zahlenfolge (ZF) und/oder von dem zweiten Teil (ZF2) der Zahlenfolge (ZF) verschieden ist, wobei insbesondere eine Startadresse des jeweiligen weiteren Teilbereichs in dem Speicherbereich (110) in Abhängigkeit des entsprechenden weiteren Teils der Zahlenfolge (ZF) gebildet wird.

7. Verfahren nach wenigstens einem der Ansprüche 5 bis 6, wobei a) alle Teilbereiche (110_1, 110_2, 110_3a, 110_3b, 110_3c, ..) dieselbe Länge aufweisen oder b) zumindest manche der Teilbereiche (110_1, 110_2, 110_3a, 110_3b, 110_3c, ..) eine unterschiedliche Länge aufweisen.

8. Verfahren nach wenigstens einem der Ansprüche 4 bis 7, wobei eine bzw. die Länge (ZF2", ZF4") wenigstens eines Teilbereichs (110_1, 110_2, 110_3a, 110_3b, 110_3c, ..) in Abhängigkeit wenigstens eines Teils (ZF2`, ZF4`) der Zahlenfolge (ZF) ermittelt wird.

9. Verfahren nach wenigstens einem der vorstehenden Ansprüche, wobei das Prüfmuster (PM) den Speicherbereich (110) nicht vollständig abdeckt.

10. Verfahren nach wenigstens einem der vorstehenden Ansprüche, wobei das Bilden (202) der Prüfgröße (PG) wenigstens eines der nachfolgenden Elemente aufweist: a) Anwenden (220) einer Hashfunktion, insbesondere einer kryptologischen Hashfunktion, insbesondere auf in dem wenigstens einen ersten Teilbereich (110_1) gespeicherte Daten (D), b) Bilden (222) einer Prüfsumme in Abhängigkeit der in dem wenigstens einen ersten Teilbereich (110_1) gespeicherte Daten (D), c) Bilden (224) einer Signatur, insbesondere in Abhängigkeit von einem ersten geheimen Schlüssel und den in dem wenigstens einen ersten Teilbereich (110_1) gespeicherten Daten (D), d) Bilden (226) eines Nachrichtenauthentifizierungskodes, insbesondere in Abhängigkeit von einem zweiten geheimen Schlüssel und den in dem wenigstens einen ersten Teilbereich (110_1) gespeicherten Daten (D).

11. Verfahren nach wenigstens einem der vorstehenden Ansprüche, wobei das Bilden (202) der Prüfgröße (PG) folgende Schritte aufweist: Bilden (228) einer primären Prüfgröße (PG1) in Abhängigkeit der in dem wenigstens einen ersten Teilbereich (110_1) gespeicherten Daten (D), vorzugsweise in Abhängigkeit von in mehreren Teilbereichen (110_1, 110_2, 110_3a) gespeicherten Daten (D), Bilden (229) einer sekundären Prüfgröße (PG2) wenigstens in Abhängigkeit der primären Prüfgröße (PG1).

12. Verfahren nach wenigstens einem der vorstehenden Ansprüche, wobei das Bilden (202) der Prüfgröße (PG) folgende Schritte aufweist: Auswählen (230) einer ersten Anzahl von Teilbereichen des Speicherbereichs (110) der Speichereinrichtung (100), Auswählen (232) einer zweiten Anzahl von Teilbereichen des Speicherbereichs (110) der Speichereinrichtung (100), die insbesondere von der ersten Anzahl verschieden sind, Bilden (234) einer bzw. der primären Prüfgröße (PG1) für die erste Anzahl von Teilbereichen des Speicherbereichs (110), Bilden (236) einer bzw. der sekundären Prüfgröße (PG2) für die zweite Anzahl von Teilbereichen des Speicherbereichs (110).

13. Verwendung des Verfahrens nach wenigstens einem der vorstehenden Ansprüche vor und/oder nach und/oder während wenigstens einer der folgenden Betriebsphasen einer Recheneinrichtung (302), die dazu ausgebildet ist, auf die Speichereinrichtung (100) zuzugreifen: a) Starten der Recheneinrichtung (302) aus einem ausgeschalteten Zustand, b) Starten der Recheneinrichtung (302) aus einem Energiesparzustand, insbesondere einem suspend-to-RAM-Zustand, c) Starten der Recheneinrichtung (302) aus einem Rücksetzzustand, reset, insbesondere einem soft-rest, d) Normalbetrieb.

14. Vorrichtung (300) zum Verarbeiten von in einer Speichereinrichtung (100) eines Steuergeräts für ein Kraftfahrzeug gespeicherten Daten, wobei die Speichereinrichtung (100) einer Recheneinrichtung (302) der Vorrichtung (300) zugeordnet ist, und wobei die Recheneinrichtung (302) dazu ausgebildet ist, die folgenden Schritte auszuführen: Ermitteln (200) von wenigstens einem ersten Teilbereich (110_1) eines Speicherbereichs (110) der Speichereinrichtung (100) durch ein zufallsabhängig oder pseudozufallsabhängig gebildetes Prüfmuster (PM), indem wenigstens eine von Startadresse, Endadresse, Länge, Bitmaske bzw. Bytemaske zufallsabhängig und/oder pseudozufallsabhängig gewählt wird, Bilden (202) einer Prüfgröße (PG), die in Abhängigkeit der in dem wenigstens einen ersten Teilbereich (110_1) gespeicherten Daten (D) gebildet wird, Vergleichen (205) der Prüfgröße (PG; PG') mit einer gespeicherten Referenz-Prüfgröße (RPG) für den wenigstens einen ersten Teilbereich (110_1), wobei bei einer Abweichung der Prüfgröße (PG) von der Referenzprüfgröße (RPG) auf eine erfolgte Veränderung oder Manipulation der Daten des zugehörigen Teilbereichs (110_1), für die die Referenz-Prüfgröße (RPG) gebildet wurde, geschlossen wird.

## Claims

1. Method for processing data stored in a memory device (100) of a control unit for a motor vehicle, wherein the method is carried out by a computing device (302), wherein the memory device (100) is assigned to the computing device (302), wherein the method comprises the following steps: determining (200) at least one first subarea (110_1) of a memory area (110) of the memory device (100) by way of a randomly dependently or pseudo-randomly dependently formed test pattern (PM) by randomly dependently and/or pseudo-randomly dependently choosing at least one out of start address, end address, length, bit mask or byte mask, forming (202) a test variable (PG) formed in a manner dependent on the data (D) stored in the at least one first subarea (110_1), comparing (205) the test variable (PG; PG') with a stored reference test variable (RPG) for the at least one first subarea (110_1), wherein an effected alteration or manipulation of the data of the associated subarea (110_1) for which the reference test variable (RPG) was formed is deduced in the case of a deviation of the test variable (PG) from the reference test variable (RPG).

2. Method according to Claim 1, further comprising: a) at least temporarily storing (204) the test variable (PG).

3. Method according to at least one of the preceding claims, wherein determining (200) the test pattern (PM) comprises at least one of the following elements: a) receiving (200b) the test pattern (PM) from an external unit (400), b) reading (200c) the test pattern (PM) out of the memory device (100) and/or a further memory device (304), c) deriving (200d) the test pattern (PM) from test pattern base data (PMB) that do not already represent a complete test pattern (PM).

4. Method according to Claim 3, wherein forming (200a) the test pattern (PM) comprises the following steps: providing (210) a random or pseudo-random, preferably binary, number sequence (ZF; ZF`), determining (212) the at least one first subarea (110_1) in a manner dependent on at least one first portion (ZF1) of the number sequence (ZF), wherein in particular a start address (SA1) of the first subarea (110_1) in the memory area (110) is formed in a manner dependent on the first portion (ZF1) of the number sequence (ZF).

5. Method according to at least one of the preceding claims, wherein the test pattern (PM) characterizes at least one second subarea (110_2), preferably a plurality of further subareas (110_3a, 110_3b, 110_3c, ..), in addition to the first subarea (110_1), wherein preferably the second subarea (110_2), in particular the at least one further subarea, does not directly adjoin the first subarea (110_1) and/or is at a non-vanishing distance from the first subarea (110_1).

6. Method according to Claim 5, referring back to Claim 4, further comprising at least one of the following elements: a) determining (214a) the second subarea (110_2) in a manner dependent on a second portion (ZF2) of the number sequence (ZF), which is different from the first portion (ZF1) of the number sequence (ZF), wherein in particular a start address (SA2) of the second subarea (110_2) in the memory area (110) is formed in a manner dependent on the second portion (ZF2) of the number sequence (ZF), b) determining (214b) the further subareas (110_3a, 110_3b, 110_3c, ..) in a manner dependent on a respective corresponding further portion of the number sequence (ZF), which in particular is different in each case from the first portion (ZF1) of the number sequence (ZF) and/or from the second portion (ZF2) of the number sequence (ZF), wherein in particular a start address of the respective further subarea in the memory area (110) is formed in a manner dependent on the corresponding further portion of the number sequence (ZF).

7. Method according to at least one of Claims 5 to 6, wherein a) all subareas (110_1, 110_2, 110_3a, 110_3b, 110_3c, ..) have the same length or b) at least some of the subareas (110_1, 110_2, 110_3a, 110_3b, 110_3c, ..) have a different length.

8. Method according to at least one of Claims 4 to 7, wherein a or the length (ZF2", ZF4") of at least one subarea (110_1, 110_2, 110_3a, 110_3b, 110_3c, ..) is determined in a manner dependent on at least one portion (ZF2`, ZF4`) of the number sequence (ZF).

9. Method according to at least one of the preceding claims, wherein the test pattern (PM) does not completely cover the memory area (110).

10. Method according to at least one of the preceding claims, wherein forming (202) the test variable (PG) comprises at least one of the following elements: a) applying (220) a hash function, in particular a cryptological hash function, in particular to data (D) stored in the at least one first subarea (110_1), b) forming (222) a checksum in a manner dependent on the data (D) stored in the at least one first subarea (110_1), c) forming (224) a signature, in particular in a manner dependent on a first secret key and the data (D) stored in the at least one first subarea (110_1), d) forming (226) a message authentication code, in particular in a manner dependent on a second secret key and the data (D) stored in the at least one first subarea (110_1).

11. Method according to at least one of the preceding claims, wherein forming (202) the test variable (PG) comprises the following steps: forming (228) a primary test variable (PG1) in a manner dependent on the data (D) stored in the at least one first subarea (110_1), preferably in a manner dependent on data (D) stored in a plurality of subareas (110_1, 110_2, 110_3a), forming (229) a secondary test variable (PG2) at least in a manner dependent on the primary test variable (PG1).

12. Method according to at least one of the preceding claims, wherein forming (202) the test variable (PG) comprises the following steps: selecting (230) a first number of subareas of the memory area (110) of the memory device (100), selecting (232) a second number of subareas of the memory area (110) of the memory device (100), which in particular are different from the first number, forming (234) a or the primary test variable (PG1) for the first number of subareas of the memory area (110), forming (236) a or the secondary test variable (PG2) for the second number of subareas of the memory area (110).

13. Use of the method according to at least one of the preceding claims before and/or after and/or during at least one of the following operating phases of a computing device (302) designed to access the memory device (100): a) starting the computing device (302) from a switched-off state, b) starting the computing device (302) from an energy-saving state, in particular a suspend-to-RAM state, c) starting the computing device (302) from a reset state, in particular a soft reset, d) normal operation.

14. Apparatus (300) for processing data stored in a memory device (100) of a control unit for a motor vehicle, wherein the memory device (100) is assigned to a computing device (302) of the apparatus (300), and wherein the computing device (302) is designed to carry out the following steps: determining (200) at least one first subarea (110_1) of a memory area (110) of the memory device (100) by way of a randomly dependently or pseudo-randomly dependently formed test pattern (PM) by randomly dependently and/or pseudo-randomly dependently choosing at least one out of start address, end address, length, bit mask or byte mask, forming (202) a test variable (PG) formed in a manner dependent on the data (D) stored in the at least one first subarea (110_1), comparing (205) the test variable (PG; PG') with a stored reference test variable (RPG) for the at least one first subarea (110_1), wherein an effected alteration or manipulation of the data of the associated subarea (110_1) for which the reference test variable (RPG) was formed is deduced in the case of a deviation of the test variable (PG) from the reference test variable (RPG).

## Revendications

1. Procédé permettant de traiter des données mémorisées dans un dispositif de mémoire (100) d'un appareil de commande pour un véhicule automobile, le procédé étant exécuté par un dispositif de calcul (302), le dispositif de mémoire (100) étant associé au dispositif de calcul (302), le procédé présentant les étapes suivantes consistant à : déterminer (200) au moins une première zone partielle (110_1) d'une zone de mémoire (110) du dispositif de mémoire (100) par un motif de contrôle (PM) formé de manière aléatoire ou pseudoaléatoire en choisissant de manière aléatoire et/ou pseudoaléatoire au moins un élément parmi une adresse initiale, une adresse finale, une longueur, un masque de bits ou un masque d'octets, former (202) une grandeur de contrôle (PG) qui est formée en fonction des données (D) mémorisées dans ladite au moins une première zone partielle (110_1), comparer (205) la grandeur de contrôle (PG, PG') avec une grandeur de contrôle de référence (RPG) mémorisée pour ladite au moins une première zone partielle (110_1), dans lequel en cas d'écart de la grandeur de contrôle (PG) par rapport à la grandeur de contrôle de référence (RPG), il est conclu qu'une variation ou manipulation des données de la zone de mémoire partielle (110_1) associée pour laquelle la grandeur de contrôle de référence (RPG) a été formée a eu lieu.

2. Procédé selon la revendication 1, présentant en outre : a) au moins une mémorisation temporaire (204) de la grandeur de contrôle (PG).

3. Procédé selon au moins l'une des revendications précédentes, la détermination (200) du motif de contrôle (PM) présentant au moins l'un des éléments suivants : a) recevoir (200b) le motif de contrôle (PM) d'une unité externe (400), b) lire (200c) le motif de contrôle (PM) à partir du dispositif de mémoire (100) et/ou d'un dispositif de mémoire supplémentaire (304), c) dériver (200d) le motif de contrôle (PM) à partir de données de base de motif de contrôle (PMB) qui ne représentent pas déjà un motif de contrôle (PM) complet.

4. Procédé selon la revendication 3, dans lequel la formation (200a) du motif de contrôle (PM) comprend les étapes suivantes consistant à : fournir (210) une séquence de chiffres (ZF, ZF') aléatoire ou pseudoaléatoire, de préférence binaire, déterminer (212) ladite au moins une première zone partielle (110_1) en fonction d'au moins une première partie (ZF1) de la séquence de chiffres (ZF), dans lequel en particulier l'adresse initiale (SA1) de la première zone partielle (110_1) est formée dans la zone de mémoire (110) en fonction de la première partie (ZF1) de la séquence de chiffres (ZF).

5. Procédé selon au moins l'une des revendications précédentes, dans lequel le motif de contrôle (PM) caractérise en plus de la première zone partielle (110_1) au moins une deuxième zone partielle (110_2), de préférence plusieurs zones partielles supplémentaires (110_3a, 110_3b, 110_3c), dans lequel de préférence la deuxième zone partielle (110_2), en particulier ladite au moins une zone partielle supplémentaire, n'est pas directement adjacente à la première zone partielle (110_1) et/ou présente une distance non nulle par rapport à la première zone partielle (110_1).

6. Procédé selon la revendication 5 lorsqu'elle dépend de la revendication 4, présentant en outre au moins l'un des éléments suivants : a) déterminer (214a) la deuxième zone partielle (110_2) en fonction d'une deuxième partie (ZF2) de la séquence de chiffres (ZF) qui est différente de la première partie (ZF1) de la séquence de chiffres (ZF), dans lequel en particulier une adresse initiale (SA2) de la deuxième zone partielle (110_2) est formée dans la zone de mémoire (110) en fonction de la deuxième partie (ZF2) de la séquence de chiffres (ZF), b) déterminer (214b) les zones partielles supplémentaires (110_3a, 110_3b, 110_3c, ...) en fonction d'une partie supplémentaire correspondante respective de la séquence de chiffres (ZF) qui est en particulier différente de la première partie (ZF1) de la séquence de chiffres (ZF) et/ou de la deuxième partie (ZF2) de la séquence de chiffres (ZF), dans lequel en particulier une adresse initiale de la zone partielle supplémentaire respective est formée dans la zone de mémoire (110) en fonction de la partie supplémentaire correspondante de la séquence de chiffres (ZF).

7. Procédé selon au moins l'une des revendications 5 à 6, dans lequel a) toutes les zones partielles (110_1, 110_2, 110_3a, 110_3b, 110_3c, ..) présentent la même longueur ou b) au moins certaines des zones partielles (110_1, 110_2, 110_3a, 110_3b, 110_3c, ..) présentent une longueur différente.

8. Procédé selon au moins l'une des revendications 4 à 7, dans lequel une ou la longueur (ZF2", ZF4") d'au moins une zone partielle (110_1, 110_2, 110_3a, 110_3b, 110_3c, ..) est déterminée en fonction d'au moins une partie (ZF2`, ZF4`) de la séquence de chiffres (ZF).

9. Procédé selon au moins l'une des revendications précédentes, dans lequel le motif de contrôle (PM) ne recouvre pas entièrement la zone de mémoire (110).

10. Procédé selon au moins l'une des revendications précédentes, dans lequel la formation (202) de la grandeur de contrôle (PG) présente au moins l'un des éléments suivants : a) appliquer (220) une fonction de hachage, en particulier une fonction de hachage cryptologique, en particulier à des données (D) mémorisées dans ladite au moins une première zone partielle (110_1), b) former (222) une somme de contrôle en fonction des données (D) mémorisées dans ladite au moins une première zone partielle (110_1), c) former (224) une signature, en particulier en fonction d'une première clé secrète et des données (D) mémorisées dans ladite au moins une première zone partielle (110_1), d) former (226) un code d'authentification de message, en particulier en fonction d'une deuxième clé secrète et des données (D) mémorisées dans ladite au moins une première zone partielle (110_1).

11. Procédé selon au moins l'une des revendications précédentes, dans lequel la formation (202) de la grandeur de contrôle (PG) présente les étapes suivantes consistant à : former (228) une grandeur de contrôle primaire (PG1) en fonction des données (D) mémorisées dans ladite au moins une première zone partielle (110_1), de préférence en fonction de données (D) mémorisées dans plusieurs zones partielles (110_1, 110_2, 110_3a), former (229) une grandeur de contrôle secondaire (PG2) au moins en fonction de la grandeur de contrôle primaire (PG1).

12. Procédé selon au moins l'une des revendications précédentes, dans lequel la formation (202) de la grandeur de contrôle (PG) présente les étapes suivantes consistant à : sélectionner (230) un premier nombre de zones partielles de la zone de mémoire (110) du dispositif de mémoire (100), sélectionner (232) un deuxième nombre de zones partielles de la zone de mémoire (110) du dispositif de mémoire (100) qui sont en particulier différentes du premier nombre, former (234) une ou la grandeur de contrôle primaire (PG1) pour le premier nombre de zones partielles de la zone de mémoire (110), former (236) une ou la grandeur de contrôle primaire (PG2) pour le deuxième nombre de zones partielles de la zone de mémoire (110).

13. Utilisation du procédé selon au moins l'une des revendications précédentes, avant et/ou après et/ou pendant au moins l'une des phases de fonctionnement suivantes d'un dispositif de calcul (302) qui est réalisé pour accéder au dispositif de mémoire (100) : a) démarrer le dispositif de calcul (302) à partir d'un état déconnecté, b) démarrer le dispositif de calcul (302) à partir d'un état de basse consommation d'énergie, en particulier à partir d'un état suspendu en RAM, c) démarrer le dispositif de calcul (302) à partir d'un état de réinitialisation, reset, en particulier d'un reset logiciel, d) fonctionnement normal.

14. Dispositif (300) permettant de traiter des données mémorisées par un dispositif de mémoire (100) d'un appareil de commande pour un véhicule automobile, le dispositif de mémoire (100) étant associé à un dispositif de calcul (302) du dispositif (300), et le dispositif de calcul (302) étant réalisé pour exécuter les étapes suivantes consistant à : déterminer (200) au moins une première zone partielle (110_1) d'une zone de mémoire (110) du dispositif de mémoire (100) par un motif de contrôle (PM) formé de manière aléatoire ou pseudoaléatoire en choisissant de manière aléatoire et/ou pseudoaléatoire au moins un élément parmi une adresse initiale, une adresse finale, une longueur, un masque de bits ou un masque d'octets, former (202) une grandeur de contrôle (PG) qui est formée en fonction des données (D) mémorisées dans ladite au moins une première zone partielle (110_1), comparer (205) la grandeur de contrôle (PG, PG') avec une grandeur de contrôle de référence (RPG) mémorisée pour ladite au moins une première zone partielle (110_1), dans lequel en cas d'écart de la grandeur de contrôle (PG) par rapport à la grandeur de contrôle de référence (RPG), il est conclu qu'une variation ou manipulation des données de la zone de mémoire partielle (110_1) associée pour laquelle la grandeur de contrôle de référence (RPG) a été formée a eu lieu.
